# EUROPEAN PATENT APPLICATION

(11) **EP 4 474 873 A1**
(43) Date of publication of application: **11.12.2024**
(21) Application number: 23746863.2
(22) Date of filing: 20.01.2023
(51) Int. Cl.: G02B 1/11, G02B 1/111, G02B 1/14, G02B 5/30, G06F 3/041, G09F 9/00

(54) **ANTIREFLECTIVE MEMBER, AND POLARIZING PLATE, IMAGE DISPLAY PANEL, IMAGE DISPLAY DEVICE, AND ANTIREFLECTIVE ARTICLE WHICH USE SAID ANTIREFLECTIVE MEMBER, AND METHOD FOR SELECTING ANTIREFLECTIVE MEMBER**

(30) Priority: 31.01.2022 JP 2022013499
(71) Applicant: Dai Nippon Printing Co., Ltd., Tokyo 162-8001 (JP)
(72) Inventor: KAWAKITA Noriaki, Tokyo 162-8001 (JP); YAMAMOTO Mariko, Tokyo 162-8001 (JP); SEIKE Osamu, Tokyo 162-8001 (JP); MATSUDA Yoshinari, Tokyo 162-8001 (JP); SOEDA Yuki, Tokyo 162-8001 (JP); TAKEI Michiaki, Tokyo 162-8001 (JP); HORII Atsushi, Tokyo 162-8001 (JP)
(74) Representative: Cabinet Beau de Loménie
(86) International application number: PCT/JP2023/001732
(87) International publication number: WO 2023/145650

(57) **Abstract**

Provided is an antireflective member capable of suppressing scratches and discoloration even when repeatedly touched with a finger. An antireflective member having a hardcoat layer and a low refractive index layer on a substrate in the order presented, wherein the antireflective member has a luminous reflectance Y value of 0.60% or less, as measured at an incident angle of light of 5 degrees from the low refractive index layer side, and a maximum value of coefficient of dynamic friction from the first outward path to the 20,000th outward path, as calculated by a predetermined measurement, of 0.85 or less.

## Description

### Technical Field

The present disclosure relates to an antireflective member, and a polarizing plate, an image display panel, an image display device, and an antireflective article in which the antireflective member is used, as well as a method for selecting an antireflective member.

### Background Art

There are some cases where antireflective members are provided on surfaces in, for example, display devices such as liquid crystal display devices, organic EL display devices and micro LED display devices, and showcases, for the purpose of an improvement in visibility. In recent years, touch panel type image display devices, which are operated by contact of a finger with screens, are widespread. In such touch panel type image display devices as well, antireflective members may be provided.

As antireflective members for touch panels, for example, PTLs 1 to 2 have been proposed.

### Citation List

### Patent Literature

PTL1: JP 2019-117414 A
PTL2: JP 2015-122060 A

### Summary of Invention

### Technical Problem

The antireflective members of PTLs 1 to 2 can provide good antireflective properties in the initial stage.

However, there are frequent cases where the antireflective members of PTLs 1 to 2 are scratched or partially discolored when repeatedly touched with a finger.

An object of the present disclosure is to provide an antireflective member capable of suppressing scratches and discoloration even when repeatedly touched with a finger, as well as a polarizing plate, an image display panel, an image display device, and an antireflective article using the same. Another object of the present disclosure is to provide a method for selecting an antireflective member capable of suppressing scratches and discoloration even when repeatedly touched with a finger.

### Solution to Problem

In general, when the pencil hardness of the antireflective member on the low refractive index layer side is high, the antireflective member is said to be less likely to be scratched. The present inventors have found that even when the pencil hardness of the antireflective member on the low refractive index layer side is increased, there are still some cases where scratches and discoloration of the antireflective member cannot be suppressed when the antireflective member is repeatedly rubbed with a soft object, such as a finger. Then, the present inventors have found that when the coefficient of dynamic friction between the antireflective member and the felt satisfies predetermined conditions, scratches and discoloration of the antireflective member can be suppressed when repeatedly touched with a finger.

The present disclosure provides the following [1] to [6].
[1] An antireflective member comprising a hardcoat layer and a low refractive index layer on a substrate in the order presented, wherein the antireflective member has
   a luminous reflectance Y value of 0.60% or less, as measured at an incident angle of light of 5 degrees from the low refractive index layer side, and
   a maximum value of coefficient of dynamic friction from a first outward path to a 20,000th outward path, as calculated by the following first measurement, of 0.85 or less: <first measurement>
   the antireflective member is fixed on a stand that can travel back and forth in a horizontal direction; the antireflective member is fixed to the stand such that the substrate side faces the stand side; furthermore, a cylindrical felt member with a bottom diameter of 12.7 mm is brought into contact with a surface of the antireflective member on the low refractive index layer side; with the felt member in a fixed position and with a load of 1.47 N applied to the antireflective member by the felt member, the stand to which the antireflective member is fixed is moved back and forth in a horizontal direction at a rate of 100 mm/sec for a distance of 50 mm for an outward path and 50 mm for a homeward path; the back-and-forth movement is performed 20,000 times; in each outward path of the 20,000 back-and-forth movements, a frictional force in a moving direction applied to the felt member is measured for every 0.02 seconds; friction forces at 15 points measured from 0.17 seconds to 0.45 seconds out of 0 seconds to 0.50 seconds, which is a moving time for each outward path, are considered to be dynamic friction forces; based on the dynamic friction forces at 15 points, an average value of dynamic friction force for each outward path is calculated; and the average value of dynamic friction force for each outward path is divided by the load to calculate the coefficient of dynamic friction from a first outward path to a 20,000th outward path.
[2] A polarizing plate comprising a polarizer, a first transparent protective plate disposed on one side of the polarizer, and a second transparent protective plate disposed on the other side of the polarizer, wherein any one of the first transparent protective plate and the second transparent protective plate is the antireflective member according to [1], and the antireflective member is disposed such that a surface thereof on the substrate side faces the polarizer side.
[3] An image display panel comprising a display element and an optical film disposed on a light-emitting surface side of the display element, wherein the image display panel comprises the antireflective member according to [1] as the optical film, the antireflective member is disposed such that a surface thereof on the low refractive index layer side faces the opposite side to the display element, and the antireflective member is disposed on an outermost surface.
[4] An image display device comprising the image display panel according to [3], the antireflective member being disposed on an outermost surface.
[5] An antireflective article, wherein the antireflective member according to [1] is disposed on a member such that a surface thereof on the low refractive index layer side faces the opposite side to the member, and the antireflective member is disposed on an outermost surface.
[6] A method for selecting an antireflective member, the method comprising
   determining whether or not the following (1) to (3) are satisfied, and selecting one that satisfies the following (1) to (3):
      (1) being an antireflective member comprising a hardcoat layer and a low refractive index layer on a substrate in the order presented;
      (2) having a luminous reflectance Y value of 0.60% or less, as measured at an incident angle of light of 5 degrees from a side having the low refractive index layer with respect to the substrate; and
      (3) having a maximum value of coefficient of dynamic friction from a first outward path to a 20,000th outward path, as calculated by the following first measurement, of 0.85 or less: <first measurement>
   the antireflective member is fixed on a stand that can travel back and forth in a horizontal direction; the antireflective member is fixed to the stand such that the substrate side faces the stand side; furthermore, a cylindrical felt member with a bottom diameter of 12.7 mm is brought into contact with a surface of the antireflective member on the low refractive index layer side; with the felt member in a fixed position and with a load of 1.47 N applied to the antireflective member by the felt member, the stand to which the antireflective member is fixed is moved back and forth in a horizontal direction at a rate of 100 mm/sec for a distance of 50 mm for an outward path and 50 mm for a homeward path; the back-and-forth movement is performed 20,000 times; in each outward path of the 20,000 back-and-forth movements, a frictional force in a moving direction applied to the felt member is measured for every 0.02 seconds; friction forces at 15 points measured from 0.17 seconds to 0.45 seconds out of 0 seconds to 0.50 seconds, which is a moving time for each outward path, are considered to be dynamic friction forces; based on the dynamic friction forces at 15 points, an average value of dynamic friction force for each outward path is calculated; and the average value of dynamic friction force for each outward path is divided by the load to calculate the coefficient of dynamic friction from a first outward path to a 20,000th outward path.

### Advantageous Effects of Invention

The antireflective member of the present disclosure, as well as a polarizing plate, an image display device, and an antireflective article using the same, can suppress scratches and discoloration even when repeatedly touched with a finger. The method for selecting an antireflective member of the present disclosure can efficiently select an antireflective member capable of suppressing scratches and discoloration when repeatedly touched with a finger.

### Brief Description of Drawings

[Fig. 1] Fig. 1 is a schematic cross-sectional view showing one embodiment of an antireflective member of the present disclosure.
[Fig. 2] Fig. 2 is a diagram for describing a first measurement.
[Fig. 3] Fig. 3 is a cross-sectional view showing one embodiment of an image display panel of the present disclosure.
[Fig. 4] Fig. 4 is a graph showing the coefficient of dynamic friction from the first outward path to the 20,000th outward path when the first measurement was performed on the antireflective member of Example 1.
[Fig. 5] Fig. 5 is a graph showing the coefficient of dynamic friction from the first outward path to the 20,000th outward path when the first measurement was performed on the antireflective member of Example 2.
[Fig. 6] Fig. 6 is a graph showing the coefficient of dynamic friction from the first outward path to the 20,000th outward path when the first measurement was performed on the antireflective member of Example 3.
[Fig. 7] Fig. 7 is a graph showing the coefficient of dynamic friction from the first outward path to the 20,000th outward path when the first measurement was performed on the antireflective member of Example 4.
[Fig. 8] Fig. 8 is a graph showing the coefficient of dynamic friction from the first outward path to the 20,000th outward path when the first measurement was performed on the antireflective member of Comparative Example 1.
[Fig. 9] Fig. 9 is a graph showing the coefficient of dynamic friction from the first outward path to the 20,000th outward path when the first measurement was performed on the antireflective member of Comparative Example 2.
[Fig. 10] Fig. 10 is a graph showing the coefficient of dynamic friction from the first outward path to the 20,000th outward path when the first measurement was performed on the antireflective member of Comparative Example 3.
[Fig. 11] Fig. 11 is a graph showing the coefficient of dynamic friction from the first outward path to the 20,000th outward path when the first measurement was performed on the antireflective member of Comparative Example 4.

### Description of Embodiments

Embodiments of the present disclosure will be described below.

### [Antireflective member]

An antireflective member of the present disclosure is an antireflective member having a hardcoat layer and a low refractive index layer on a substrate in the order presented, wherein the antireflective member has
a luminous reflectance Y value of 0.60% or less, as measured at an incident angle of light of 5 degrees from the low refractive index layer side, and
a maximum value of coefficient of dynamic friction from the first outward path to the 20,000th outward path, as calculated by the following first measurement, of 0.85 or less: <first measurement>
the antireflective member is fixed on a stand that can travel back and forth in the horizontal direction; the antireflective member is fixed to the stand such that the substrate side faces the stand side; furthermore, a cylindrical felt member with a bottom diameter of 12.7 mm is brought into contact with the surface of the antireflective member on the low refractive index layer side; with the felt member in a fixed position and with a load of 1.47 N applied to the antireflective member by the felt member, the stand to which the antireflective member is fixed is moved back and forth in the horizontal direction at a rate of 100 mm/sec for a distance of 50 mm for an outward path and 50 mm for a homeward path; the back-and-forth movement is performed 20,000 times; in each outward path of the 20,000 back-and-forth movements, the frictional force in the moving direction applied to the felt member is measured for every 0.02 seconds; friction forces at 15 points measured from 0.17 seconds to 0.45 seconds out of 0 seconds to 0.50 seconds, which is a moving time for each outward path, are considered to be dynamic friction forces; based on the dynamic friction forces at 15 points, the average value of dynamic friction force for each outward path is calculated; and the average value of dynamic friction force for each outward path is divided by the load to calculate the coefficient of dynamic friction from the first outward path to the 20,000th outward path.

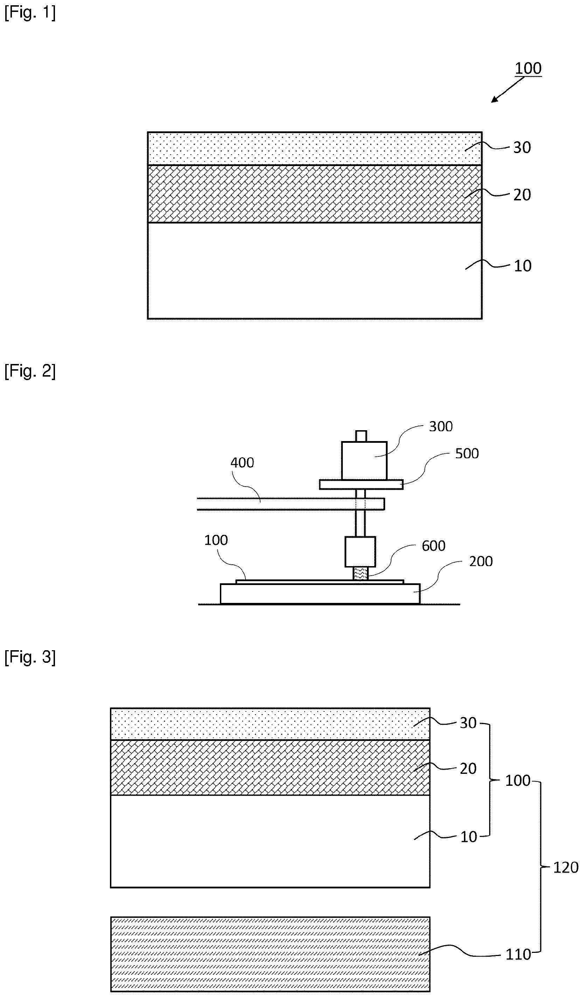

Fig. 1 is a schematic cross-sectional view of a cross-sectional shape of an antireflective member 100 of the present disclosure.

The antireflective member 100 of Fig. 1 has a hardcoat layer 20 and a low refractive index layer 30 on a substrate 10.

Fig. 1 is a schematic cross-sectional view. That is, the scale of each layer constituting the antireflective member 100 and the scale of each material are schematic for ease of illustration, and thus are different from the actual scale and the like. The same applies to Figs. 2 and 3.

In the present specification, the "luminous reflectance Y value, as measured at an incident angle of light of 5 degrees from the low refractive index layer side" may be referred to as the "luminous reflectance Y value".

The antireflective member of the present disclosure is not limited to the laminated structure shown in Fig. 1 as long as the antireflective member has a hardcoat layer and a low refractive index layer on a substrate and has a luminous reflectance Y value and a maximum value of coefficient of dynamic friction in predetermined ranges. For example, the antireflective member may have other layers, such as a high refractive index layer and an anti-static layer. A preferred embodiment of the laminated structure of the antireflective member of the present disclosure is a laminated structure having a hardcoat layer, a high refractive index layer, and a low refractive index layer on a substrate in the order presented.

### <Luminous reflectance Y value>

The antireflective member of the present disclosure is required to have a luminous reflectance Y value of 0.60% or less, as measured at an incident angle of light of 5 degrees from the low refractive index layer side.

When the luminous reflectance Y value is greater than 0.60%, the antireflective properties are insufficient, and therefore, the visibility of an image display device or the like cannot be made good.

When the luminous reflectance Y value is greater than 0.60%, the maximum value of coefficient of dynamic friction is easily reduced. The antireflective member of the present disclosure is characterized by having a luminous reflectance Y value of 0.60% or less and also having a small maximum value of coefficient of dynamic friction.

The luminous reflectance Y value is preferably 0.50% or less, and more preferably 0.40% or less.

When the luminous reflectance Y value is too small, the low refractive index layer tends to become brittle. When the low refractive index layer becomes too brittle, it is difficult to set the maximum value of coefficient of dynamic friction to 0.85 or less in the first measurement. In addition, when the low refractive index layer becomes brittle, the luminous reflectance Y value is likely to be increased after the first measurement. For this reason, the luminous reflectance Y value is preferably 0.30% or more, and more preferably 0.32% or more.

Examples of the preferred range of the luminous reflectance Y value include 0.30% or more and 0.60% or less, 0.30% or more and 0.50% or less, 0.30% or more and 0.40% or less, 0.32% or more and 0.60% or less, 0.32% or more and 0.50% or less, and 0.32% or more and 0.40% or less.

In the present disclosure, unless otherwise mentioned, the luminous reflectance Y value means the luminous reflectance Y value before starting the first measurement.

The luminous reflectance Y value is measured from the low refractive index layer side of the antireflective member. The low refractive index layer side of the antireflective member means a side having the low refractive index layer with respect to the hardcoat layer.

In the present disclosure, the luminous reflectance Y value is measured by adhering a black plate to the surface of the antireflective member on the substrate side via a transparent adhesive layer to prepare a sample and by causing light incident from the low refractive index layer side of the sample at an incident angle of 5°. The light source condition for calculating the reflectance is preferably a C light source.

The difference in refractive index between the member in contact with transparent pressure-sensitive adhesive layer of sample and the transparent pressure-sensitive adhesive layer is preferably 0.15 or less, more preferably 0.10 or less, and still more preferably 0.05 or less. The member in contact with transparent pressure-sensitive adhesive layer of sample is, for example, the substrate. The black plate preferably has a total light transmittance of 1% or less, more preferably 0%, in accordance with JIS K7361-1:1997. The difference in refractive index between the resin constituting the black plate and the refractive index of the transparent adhesive layer is preferably 0.15 or less, more preferably 0.10 or less, and still more preferably 0.05 or less.

In the present specification, the luminous reflectance Y value, haze, and total light transmittance are determined by performing measurements at 16 locations and averaging the measurement values at 14 locations excluding the minimum value and the maximum value, unless otherwise noted.

In the present specification, for sixteen measurement points, it is preferable that each of the sixteen intersections obtained when a region of 0.5 cm from the outer edge of the measurement sample is removed as a margin and lines are drawn to divide the remaining region into five equal parts in the vertical and horizontal directions is set as a center of measurement. For example, when the measurement sample is a rectangle, it is preferable that the measurement is performed so that each of the intersections at sixteen points obtained when a region of 0.5 cm from the outer edge of the rectangle is removed as a margin and lines are drawn to divide the remaining region into five equal parts in the vertical and horizontal directions is set as a center of measurement, and the parameter is calculated in terms of the average value thereof. When the measurement sample has a shape other than a rectangle such as a circle, an ellipse, a triangle, or a pentagon, it is preferable to draw a rectangle inscribed inside these shapes and measurement is performed at each of the sixteen points of the rectangle according to the above method.

In the present specification, the measurement of luminous reflectance Y value and the first measurement, as well as the measurements of haze, total light transmittance, water contact angle, pencil hardness, and surface shape, as described later, shall be performed at a temperature of 23 ± 5°C and a relative humidity of 40% or more and 65% or less, unless otherwise noted. Further, before starting each measurement, the measurement is performed after exposing the target sample to the atmosphere for 30 minutes or more and 60 minutes or less.

The antireflective member of the present disclosure preferably has a luminous reflectance Y value after the first measurement, as described later, of 2.0% or less, more preferably 1.8% or less, and still more preferably 1.7% or less.

### <Maximum value of coefficient of dynamic friction>

The antireflective member of the present disclosure is required to have a maximum value of coefficient of dynamic friction from the first outward path to the 20,000th outward path, as calculated by the first measurement, of 0.85 or less.

In the present specification, the "maximum value of coefficient of dynamic friction from the first outward path to the 20,000th outward path, as calculated by the first measurement" may be referred to as the "maximum value of coefficient of dynamic friction".

When the maximum value of coefficient of dynamic friction is greater than 0.85, scratches and discoloration of the antireflective member cannot be suppressed when the antireflective member is repeatedly touched with a finger. The discoloration of the antireflective member is considered to be caused by partial shaving of the low refractive index layer, resulting in the difference in thickness between the shaved and unshaved portions.

The maximum value of coefficient of dynamic friction is preferably 0.80 or less, and more preferably 0.78 or less.

When the maximum value of coefficient of dynamic friction is too small, the surface of the antireflective member may become too slippery, which may deteriorate the operability of a touch panel. In addition, the maximum value of coefficient of dynamic friction is too small, the scratch resistance is likely to be made good against weakly rubbing force with a soft object, such as when operating a touch panel, whereas the scratch resistance against a hard object is likely to be reduced. The cause of reduced scratch resistance against a hard object is considered to be, for example, a higher content of a fluorine-based compound. For this reason, the maximum value of coefficient of dynamic friction is preferably 0.35 or more, and more preferably 0.45 or more.

Examples of the preferred range of the maximum value of coefficient of dynamic friction include 0.35 or more and 0.85 or less, 0.50 or more and 0.85 or less, 0.35 or more and 0.80 or less, 0.50 or more and 0.80 or less, 0.35 or more and 0.78 or less, and 0.50 or more and 0.78 or less.

In general, when the pencil hardness of the antireflective member on the low refractive index layer side is high, the antireflective member is said to be less likely to be scratched. The present inventors have found that even when the pencil hardness of the antireflective member on the low refractive index layer side is increased, there are still some cases where scratches of the antireflective member cannot be suppressed when the antireflective member is repeatedly rubbed with a soft object, such as a finger. Then, the present inventors have found that when the coefficient of dynamic friction between the antireflective member and the felt satisfies predetermined conditions, scratches and discoloration of the antireflective member can be suppressed when repeatedly touched with a finger. Therefore, it makes technical sense to specify the maximum value of coefficient of dynamic friction of the antireflective member in a predetermined range.

In the present specification, the "maximum value of coefficient of dynamic friction" means the "maximum value of coefficient of dynamic friction from the first outward path to the 20,000th outward path, as calculated by the first measurement". That is, the "maximum value of coefficient of dynamic friction" as used herein is the value when the number of sliding movements is increased to as many as 20,000 outward paths. The antireflective member of the present disclosure can easily suppress the occurrence of scratches and discoloration over time in actual use by setting the maximum value of coefficient of dynamic friction to a predetermined value when the number of sliding movements is increased. On the other hand, even when the coefficient of dynamic friction is small for a small number of sliding movements, scratches and discoloration may occur over time in actual use.

The first measurement shall be performed as follows:
<first measurement>
the antireflective member is fixed on a stand that can travel back and forth in the horizontal direction; the antireflective member is fixed to the stand such that the substrate side faces the stand side; furthermore, a cylindrical felt member with a bottom diameter of 12.7 mm is brought into contact with the surface of the antireflective member on the low refractive index layer side; with the felt member in a fixed position and with a load of 1.47 N applied to the antireflective member by the felt member, the stand to which the antireflective member is fixed is moved back and forth in the horizontal direction at a rate of 100 mm/sec for a distance of 50 mm for an outward path and 50 mm for a homeward path; the back-and-forth movement is performed 20,000 times; in each outward path of the 20,000 back-and-forth movements, a frictional force in the moving direction applied to the felt member is measured for every 0.02 seconds; friction forces at 15 points measured from 0.17 seconds to 0.45 seconds out of 0 seconds to 0.50 seconds, which is a moving time for each outward path, are considered to be dynamic friction forces; based on the dynamic friction forces at 15 points, the average value of dynamic friction force for each outward path is calculated; and the average value of dynamic friction force for each outward path is divided by the load to calculate the coefficient of dynamic friction from the first outward path to the 20,000th outward path.

Fig. 2 is a diagram for describing the first measurement.

In Fig. 2, the reference sign 200 is a stand that can travel back and forth in the horizontal direction. The surface of the stand 200 is preferably horizontal and smooth.

In Fig. 2, the antireflective member 100 is fixed to the stand 200. The antireflective member 100 is fixed to the stand 200 such that the substrate side faces the stand side. The antireflective member 100 can be fixed to the stand 200 with, for example, a pressure-sensitive adhesive tape.

In the first measurement, a felt member 600 is brought into contact with the surface of the antireflective member 100 on the low refractive index layer side. As the felt member, cylindrical felt with a bottom diameter of 12.7 mm is used. In addition, as the felt member, wool felt with a wool content of 95% by mass or more and a density of 0.39 g/cm³ or more and 0.43 g/cm³ or less is preferably used. Examples of such felt include "Jumbo Wearaser (TM), product number: CS-7" from TABER Industries.

The bottom surface of the felt member corresponds to the contact surface between the felt member and the antireflective member.

In the first embodiment, with the felt member 600 in a fixed position and with a load of 1.47 N applied to the antireflective member 100 by the felt member 600, the stand 200 to which the antireflective member 100 is fixed is moved back and forth in the horizontal direction at a rate of 100 mm/sec for a distance of 50 mm for an outward path and 50 mm for a homeward path. In Fig. 2, the felt member 600 applies a load to the antireflective member 100 by placing a weight 300 on a base 500 located above the felt member 600.

In the first embodiment, the back-and-forth movement is performed 20,000 times. Then, in each outward path of the 20,000 back-and-forth movements, the frictional force in the moving direction applied to the felt member is measured for every 0.02 seconds. Friction forces at 15 points measured from 0.17 seconds to 0.45 seconds out of 0 seconds to 0.50 seconds, which is a moving time for each outward path, are considered to be dynamic friction forces. Based on the dynamic friction forces at 15 points, the average value of dynamic friction force for each outward path is calculated. Then, the average value of dynamic friction force for each outward path is divided by the load to calculate the coefficient of dynamic friction from the first outward path to the 20,000th outward path.

The dynamic friction force applied in the moving direction of the felt member can be measured by, for example, connecting a detection unit capable of detecting the friction force to a retainer 400 in Fig. 2.

In the first measurement, the friction force for each outward path is considered to be static friction force from 0 seconds to 0.15 seconds and dynamic friction force from 0.17 seconds to 0.45 seconds.

Examples of the measurement device that can perform the first measurement include a surface property measuring instrument "trade name: HEIDON TYPE-14FW" from Shinto Scientific Co., Ltd.

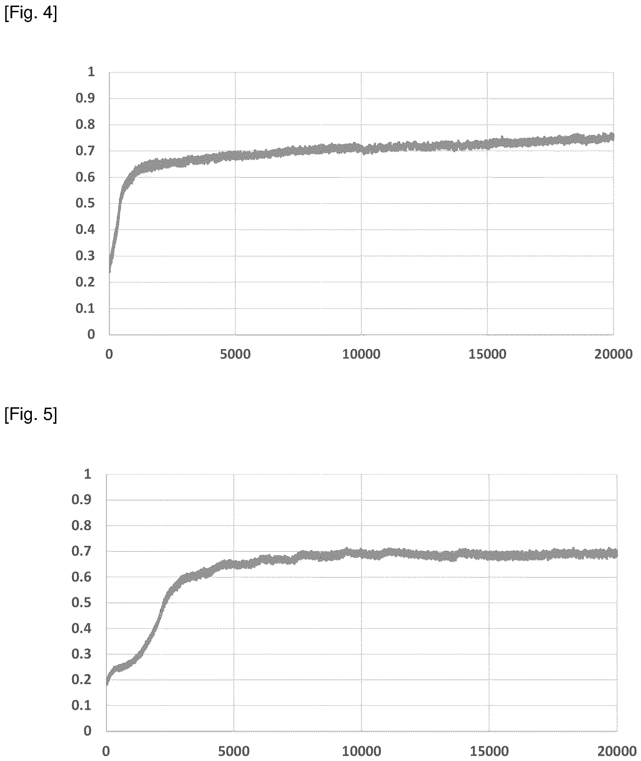

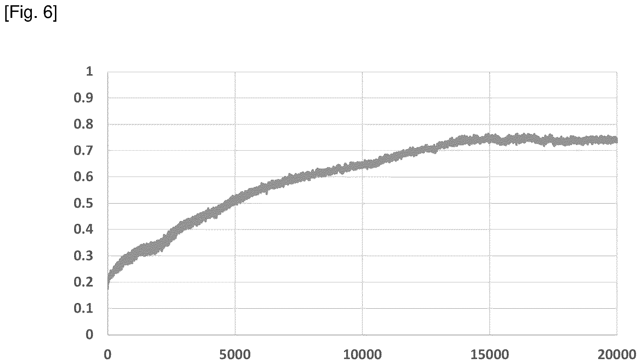

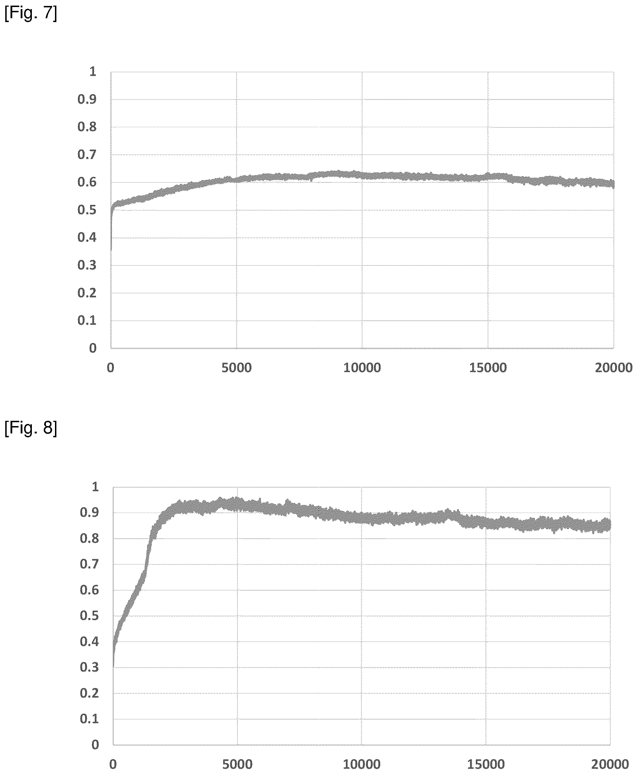

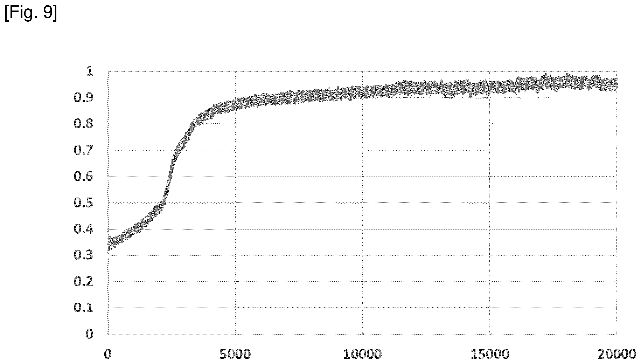

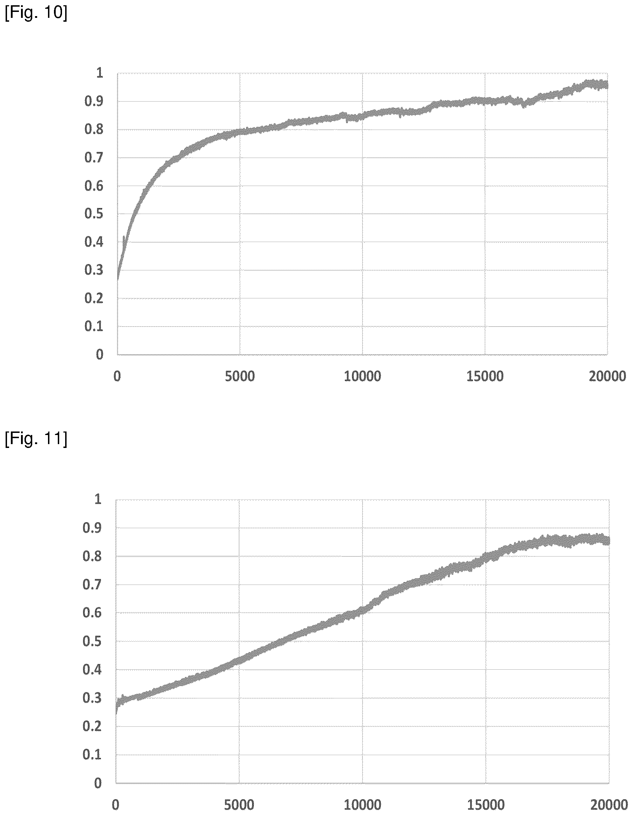

Figs. 4 to 11 are graphs showing the coefficient of dynamic friction from the first outward path to the 20,000th outward path when the first measurement was performed on the antireflective members of Examples 1 to 4 and Comparative Examples 1 to 4. The horizontal axis is the number of outward paths and the vertical axis is the coefficient of dynamic friction.

### <Difference in coefficient of friction>

In the antireflective member of the present disclosure, with respect to the first measurement, the difference between the coefficient of dynamic friction at the first outward path and the maximum value of coefficient of dynamic friction is preferably 0.60 or less.

By setting the above difference to 0.60 or less, scratches and discoloration can be more easily suppressed when the antireflective member is repeatedly touched with a finger. The difference is more preferably 0.59 or less, and still more preferably 0.58 or less.

When the difference is too small, the luminous reflectance Y value tends to be higher. In addition, when the difference is too small, the strength of the low refractive index layer tends to be too strong. Then, when the strength of the low refractive index layer is too strong, cracks may occur in the low refractive index layer when the antireflective member is cut or bent. For this reason, the difference is preferably 0.10 or more, and more preferably 0.15 or more.

Examples of the preferred range of the difference include 0.20 or more and 0.60 or less, 0.20 or more and 0.59 or less, 0.20 or more and 0.58 or less, 0.25 or more and 0.60 or less, 0.25 or more and 0.59 or less, and 0.25 or more and 0.58 or less.

### <Slope of regression line>

In the antireflective member of the present disclosure, the slope of a regression line, as calculated by the least squares method based on the following first scatter diagram, is preferably 8.0 × 10⁻⁵ or less:
<first scatter diagram>
a scatter diagram, with respect to the first measurement, in which plotting is made with the number of outward paths on the horizontal axis and the coefficient of dynamic friction from the first outward path to the 2000th outward path on the vertical axis.

By setting the above slope to 8.0 × 10⁻⁵ or less, scratches and discoloration can be more easily suppressed when the antireflective member is repeatedly touched with a finger. In addition, by setting the slope to 8.0 × 10⁻⁵ or less, rapid changes in the feeling of touch with a finger can be easily suppressed. The slope is more preferably 7.7 × 10⁻⁵ or less, and still more preferably 7.5 × 10⁻⁵ or less.

When the slope is too small, the strength of the low refractive index layer tends to be too strong. Then, when the strength of the low refractive index layer is too strong, cracks may occur in the low refractive index layer when the antireflective member is cut or bent. For this reason, the slope is preferably 9.0 × 10⁻⁸ or more, and more preferably 9.0 × 10⁻⁷ or more.

Examples of the preferred range of the slope include 9.0 × 10⁻⁸ or more and 8 × 10⁻⁵ or less, 9.0 × 10⁻⁸ or more and 7.7 × 10⁻⁵ or less, 9.0 × 10⁻⁸ or more and 7.5 × 10⁻⁵ or less, 9.0 × 10⁻⁷ or more and 8.0 × 10⁻⁵ or less, 9.0 × 10⁻⁷ or more and 7.7 × 10⁻⁵ or less, and 9.0 × 10⁻⁷ or more and 7.5 × 10⁻⁵ or less.

In the present specification, the "maximum value of coefficient of dynamic friction", "difference between the coefficient of dynamic friction at the first outward path and the maximum value of coefficient of dynamic friction", and "slope of a regression line" are determined by performing measurements on three samples once each and averaging the three values obtained.

### <Substrate>

The substrate preferably has optical transmitting properties, smoothness, heat resistance, and excellent mechanical strength. Examples of such a substrate include plastic films such as polyester, triacetyl cellulose (TAC), cellulose diacetate, cellulose acetate butyrate, polyamide, polyimide, polyether sulfone, polysulfone, polypropylene, polymethylpentene, polyvinyl chloride, polyvinyl acetal, polyether ketone, polymethyl methacrylate, polycarbonate, polyurethane, and amorphous olefin (Cyclo-Olefin-Polymer: COP). The substrate may be a laminate of two or more plastic films.

Among the above, from the viewpoint of mechanical strength and dimensional stability, a polyester film such as polyethylene terephthalate and polyethylene naphthalate is preferable. Among polyester films, films subjected to a stretching process are preferable, and films subjected to a biaxial stretching process are more preferable. TAC and acrylic are preferable from the viewpoint of optical transmittance and optical isotropy. COP and polyester are preferable in terms of excellent weather resistance.

The thickness of the substrate is preferably 5 µm or more and 300 µm or less, more preferably 20 µm or more and 200 µm or less, and still more preferably 30 µm or more and 120 µm or less.

When it is desired to reduce the thickness of the antireflective member, the upper limit of the thickness of the substrate is preferably 80 µm or less, and more preferably 70 µm or less.

The thickness of the substrate can be measured with Digimatic standard outside micrometer (product number "MDC-25SX" available from MITUTOYO CORPORATION) or the like. The thickness of the substrate may be the average of the values measured at any ten points.

Examples of the preferred range of the thickness of the substrate include 5 µm or more and 300 µm or less, 5 µm or more and 200 µm or less, 5 µm or more and 120 µm or less, 5 µm or more and 80 µm or less, 5 µm or more and 70 µm or less, 5 µm or more and 20 µm or less, 20 µm or more and 300 µm or less, 20 µm or more and 200 µm or less, 20 µm or more and 120 µm or less, 20 µm or more and 80 µm or less, 20 µm or more and 70 µm or less, 30 µm or more and 300 µm or less, 30 µm or more and 200 µm or less, 30 µm or more and 120 µm or less, 30 µm or more and 80 µm or less, 30 µm or more and 70 µm or less.

In order to improve adhesiveness, the surface of the substrate may be subjected to a physical treatment such as a corona discharge treatment or a chemical treatment, or an easily adhesive layer may be formed on the surface of the substrate.

The substrate preferably has a total light transmittance of 70% or more, more preferably 80% or more, and still more preferably 85% or more, in accordance with JIS K7361-1:1997.

### <Low refractive index layer>

The low refractive index layer is preferably located on the surface of the antireflective member.

The low refractive index layer preferably contains a binder resin and hollow particles, and more preferably a binder resin, hollow particles, and a leveling agent.

In order to easily set the "maximum value of coefficient of dynamic friction", "difference between the coefficient of dynamic friction at the first outward path and the maximum value of coefficient of dynamic friction", and "slope of a regression line" to the above ranges, it is preferable for the low refractive index layer to satisfy at least one or more conditions selected from the group consisting of the following a1 to a7. For the "maximum value of coefficient of dynamic friction" and "difference between the coefficient of dynamic friction at the first outward path and the maximum value of coefficient of dynamic friction", the following a1 to a7 are effective. For the "slope of a regression line", the following a5 and a7 are effective.

a1: Containing hollow particles whose surface is treated with methacryloyl groups.
a2: Containing hollow particles and solid particles, and setting the content of the solid particles with respect to the hollow particles to a certain level or more.
a3: Containing, as the binder resin, a predetermined amount of a cured product of a low functional (meth)acrylate-based compound. (In the present specification, the low functional (meth)acrylate-based compound means a bifunctional or higher functional and trifunctional or lower functional (meth)acrylate-based compound.)
a4: Substantially free from, as the binder resin, a cured product of a polyfunctional (meth)acrylate-based compound. (In the present specification, the polyfunctional (meth)acrylate-based compound means a tetrafunctional or higher functional (meth)acrylate-based compound.)
a5: Containing, as the binder resin, a predetermined amount of a cured product of polysilsesquioxane.
a6: Containing a predetermined amount of a reaction product of a silicone leveling agent.
a7: Containing a predetermined amount of a reaction product of a fluorine leveling agent.

There are preferred combinations among the above conditions of a1 to a7.

First, a combination that satisfies the conditions of a1, a2, a3, a4, and a6 is preferable. In the case of the first combination, the proportion of the cured product of a low functional (meth)acrylate-based compound with respect to the total amount of the binder resin is preferably 80% by mass or more, more preferably 90% by mass or more, and still more preferably 100% by mass.

Second, a combination that satisfies the conditions of a1, a2, a4, a5, and a6 is preferable. In the case of the second combination, the proportion of the cured product of polysilsesquioxane with respect to the total amount of the binder resin is preferably 80% by mass or more, more preferably 90% by mass or more, and still more preferably 100% by mass. When a cured product of polysilsesquioxane is contained as the binder resin, the compatibility between the silicone leveling agent and the binder resin component becomes good, and the leveling agent is less likely to be eccentrically located on the surface of the low refractive index layer. Therefore, when combining a cured product of polysilsesquioxane and a silicone leveling agent, it is preferable to increase the proportion of the cured product of polysilsesquioxane in the binder resin to enhance scratch resistance.

Third, a combination that satisfies the conditions of a1, a2, a4, a5, and a7 is preferable. In the case of the third combination, the proportion of the cured product of polysilsesquioxane with respect to the total amount of the binder resin is preferably 40% by mass or more, more preferably 50% by mass or more, and still more preferably 70% by mass or more. In the third combination, it is also preferable to contain a cured product of polysilsesquioxane and a cured product of a low functional (meth)acrylate-based compound as the binder resin. The mass proportion of the cured product of polysilsesquioxane and the cured product of a low functional (meth)acrylate-based compound is preferably 40:60 to 95:5, and more preferably 50:50 to 80:20.

In addition, in order to easily set the "maximum value of coefficient of dynamic friction", "difference between the coefficient of dynamic friction at the first outward path and the maximum value of coefficient of dynamic friction", and "slope of a regression line" to the above ranges, it is preferable for the low refractive index layer to satisfy at least one or more production conditions selected from the group consisting of the following b1 to b2.
b1: Slowing down the drying of a coating solution for a low refractive index layer.
b2: Containing, as the solvent contained in the coating solution for a low refractive index layer, a solvent with a low evaporation rate.

### <<Binder resin>>

The low refractive index layer preferably contains a cured product of a curable resin composition as the binder resin. The curable resin composition is a composition containing a curable compound such as a thermosetting resin or an ionizing radiation-curable compound.

The ratio of the cured product of the curable resin composition based on the total binder resin in the low refractive index layer is preferably 50% by mass or more, more preferably 70% by mass or more, more preferably 90% by mass or more, and most preferably 100% by mass.

Examples of the curable resin composition for the low refractive index layer include thermosetting resin compositions and ionizing radiation-curable resin compositions, and ionizing radiation-curable resin compositions are preferred. That is, the low refractive index layer preferably contains a cured product of an ionizing radiation-curable resin composition as a binder resin.

The thermosetting resin composition is a composition containing at least a thermosetting resin, and is a resin composition that is cured by heating.

Examples of thermosetting resins include acrylic resins, urethane resins, phenol resins, urea melamine resins, epoxy resins, unsaturated polyester resins, and silicone resins. If necessary, a curing agent is added to these curable resins in the thermosetting resin composition.

The ionizing radiation-curable resin composition is a composition containing a compound having an ionizing radiation-curable functional group (hereinafter also referred to as an "ionizing radiation-curable compound"). Examples of the ionizing radiation-curable functional group include ethylenically unsaturated bond groups such as a (meth)acryloyl group, a vinyl group, an allyl group, an epoxy group, and an oxetanyl group. The ionizing radiation-curable compound preferably has two or more ionizing radiation-curable functional groups.

The ionizing radiation-curable compound is preferably a compound having an ethylenically unsaturated bond group, and in particular, a (meth)acrylate-based compound having a (meth)acryloyl group is more preferable. Both monomers and oligomers can be used as the (meth)acrylate-based compound.

In the present specification, the "polysilsesquioxane substituted with one or more reactive groups", as described later, shall be distinguished from the "(meth)acrylate-based compound". That is, in the present specification, the "(meth)acrylate-based compound" is a concept that does not include the "polysilsesquioxane substituted with one or more reactive groups".

The ionizing radiation-curable compound preferably includes a low functional (meth)acrylate-based compound. In other words, the low refractive index layer preferably contains, as the binder resin, a cured product of a low functional (meth)acrylate-based compound.

By containing a low functional (meth)acrylate-based compound as the ionizing radiation-curable compound, polymerization shrinkage of the low refractive index layer can be suppressed while imparting predetermined hardness to the low refractive index layer. By suppressing polymerization shrinkage of the low refractive index layer, the surface shape of the low refractive index layer can be suppressed from becoming uneven, thus making it easier to set the "maximum value of coefficient of dynamic friction" and "difference between the coefficient of dynamic friction at the first outward path and the maximum value of coefficient of dynamic friction" to the above ranges. In addition, the low functional (meth)acrylate-based compound reacts more easily with the leveling agent described later, thus making it easier to fix the leveling agent in the low refractive index layer.

In the present specification, the "low functional (meth)acrylate-based compound" means a "(meth)acrylate-based compound having 2 or more and 3 or less (meth)acryloyl groups". In the present specification, the "polyfunctional (meth)acrylate-based compound" means a "(meth)acrylate-based compound having 4 or more (meth)acryloyl groups".

The proportion of the cured product of a low functional (meth)acrylate-based compound with respect to the total amount of the binder resin is preferably 50% by mass or more, more preferably 70% by mass or more, still more preferably 90% by mass or more, and further preferably 100% by mass. The low functional (meth)acrylate-based compound is preferably a bifunctional (meth)acrylate-based compound. The low functional (meth)acrylate-based compound is preferably a low functional acrylate-based compound.

Examples of the bifunctional (meth)acrylate-based compound include polyalkylene glycol di(meth)acrylate such as polyethylene glycol diacrylate and polybutylene glycol di(meth)acrylate, ethylene glycol di(meth)acrylate, di(meth)acrylate isocyanurate, bisphenol A tetraethoxy diacrylate, bisphenol A tetrapropoxy diacrylate, and 1,6-hexanediol diacrylate. Among these, polyalkylene glycol di(meth)acrylate is preferable.

Examples of the trifunctional (meth)acrylate-based compound include trimethylolpropane tri(meth)acrylate, pentaerythritol tri(meth)acrylate, and isocyanuric acid-modified tri(meth)acrylate.

Examples of the tetrafunctional or higher functional multifunctional (meth)acrylate-based compound include pentaerythritol tetra(meth)acrylate, dipentaerythritol hexa(meth)acrylate, and dipentaerythritol tetra(meth)acrylate.

These (meth)acrylate-based compounds may be modified.

Examples of the (meth)acrylate-based oligomer include an acrylate-based polymer such as urethane (meth)acrylate, epoxy (meth)acrylate, polyester (meth)acrylate, and polyether (meth)acrylate.

The urethane (meth)acrylate is obtained, for example, by reacting a polyhydric alcohol and an organic diisocyanate with hydroxy (meth)acrylate.

Preferred examples of the epoxy (meth)acrylate include a (meth)acrylate obtained by reacting a trifunctional or higher functional aromatic epoxy resin, alicyclic epoxy resin, aliphatic epoxy resin or the like with a (meth)acrylic acid, a (meth)acrylate obtained by reacting a bifunctional or higher functional aromatic epoxy resin, alicyclic epoxy resin, aliphatic epoxy resin or the like with a polybasic acid and a (meth)acrylic acid, and a (meth)acrylate obtained by reacting a bifunctional or higher functional aromatic epoxy resin, alicyclic epoxy resin, aliphatic epoxy resin or the like with a phenol compound and a (meth)acrylic acid.

The (meth)acrylate-based compound may have a modified partial molecular structure from the viewpoint of suppressing the variation in shrinkage by crosslinking. For example, such a compound modified with ethylene oxide, propylene oxide, caprolactone, isocyanuric acid, alkyl, cyclic alkyl, aromatic, bisphenol, or the like can also be used.

It is preferable for the low refractive index layer to be substantially free from, as the binder resin, a cured product of a polyfunctional (meth)acrylate-based compound.

By being substantially free from a polyfunctional (meth)acrylate-based compound as the ionizing radiation-curable compound, polymerization shrinkage of the low refractive index layer can be suppressed. By suppressing polymerization shrinkage of the low refractive index layer, the surface shape of the low refractive index layer can be suppressed from becoming uneven, thus making it easier to set the "maximum value of coefficient of dynamic friction" and "difference between the coefficient of dynamic friction at the first outward path and the maximum value of coefficient of dynamic friction" to the above ranges. In addition, there is a tendency that the polyfunctional (meth)acrylate-based compound easily aggregates the hollow particles and easily makes the surface shape of the low refractive index layer uneven.

In the present specification, "substantially free from, as the binder resin, a cured product of a polyfunctional (meth)acrylate-based compound" means that the proportion of the cured product of a polyfunctional (meth)acrylate-based compound with respect to the total amount of the binder resin is 1% by mass or less, and it is preferably 0.1% by mass or less, more preferably 0.01% by mass or less, and still more preferably 0% by mass.

The ionizing radiation-curable compound can be used alone, or in combination of two or more.

In the case where the ionizing radiation-curable compound is an ultraviolet ray-curable compound, the coating solution for a low refractive index layer preferably contains an additive such as a photopolymerization initiator and a photopolymerization accelerator.

Examples of the photopolymerization initiator include at least one selected from acetophenone, benzophenone, α-hydroxyalkylphenone, Michler's ketone, benzoin, benzildimethylketal, benzoyl benzoate, α-acyloxime ester, α-aminoalkylphenone, and a thioxanthone compound.

The photopolymerization accelerator may enhance the curing rate through the reduction of polymerization inhibition due to the air on curing, and examples thereof include at least one selected from isoamyl p-dimethylaminobenzoate and ethyl p-dimethylaminobenzoate.

Preferred examples of the curable compound further include polysilsesquioxane. That is, the low refractive index layer preferably contains, as the binder resin, a cured product of polysilsesquioxane.

By containing, as the binder resin, a cured product of polysilsesquioxane, the scratch resistance of the low refractive index layer can be easily made good. Since the cured product of polysilsesquioxane easily improves the toughness of not only the surface of the layer, but also the layer as a whole, it is considered to easily make the scratch resistance of the low refractive index layer good. It is also considered that the cured product of polysilsesquioxane has good adhesion to silica, and thus easily makes the scratch resistance of the low refractive index layer good.

The proportion of the cured product of polysilsesquioxane with respect to the total amount of the binder resin is preferably 40% by mass or more, more preferably 50% by mass or more, more preferably 70% by mass or more, more preferably 90% by mass or more, and more preferably 100% by mass.

The polysilsesquioxane is a polymer having a structural unit represented by the following general formula (1). The number of the following structural units is preferably 4 or more and 30 or less.

[RSiO_{1.5}] (1)

Examples of the structure of the polysilsesquioxane include a random structure, a ladder structure, and a cage structure. Among these, a cage structure is preferable.

In the polysilsesquioxane, at least one or more silicon atoms in the structural units are preferably substituted with reactive groups. When the polysilsesquioxane is substituted with one or more reactive groups, it reacts more easily with the leveling agent described later, thus making it easier to fix the leveling agent in the low refractive index layer. Therefore, the polysilsesquioxane substituted with one or more reactive groups can easily set the "maximum value of coefficient of dynamic friction", "difference between the coefficient of dynamic friction at the first outward path and the maximum value of coefficient of dynamic friction", and "slope of a regression line" to the above ranges. In addition, the polysilsesquioxane substituted with one or more reactive groups can easily reduce the proportion of siloxane bonds exposed on the surface side of the low refractive index layer, thereby easily improving chemical resistance.

Examples of the reactive functional groups include a (meth)acryloyl group, a vinyl group, and an epoxy group. Among these, a (meth)acryloyl group is preferable.

More specific examples of the reactive functional groups include (meth)acrylate, an alkyl (meth)acrylate having 1 or more and 20 or less carbon atoms, a cycloalkyl epoxide having 3 or more and 20 or less carbon atoms, and an alkylcycloalkane epoxide having 1 or more and 10 or less carbon atoms.

The functional group equivalent amount (g/eq) of the reactive functional groups in the polysilsesquioxane is preferably 50 or more and 1000 or less, and more preferably 100 or more and 500 or less. By setting the functional group equivalent amount to the aforementioned range, polymerization shrinkage of the low refractive index layer can be suppressed, and the leveling agent can be easily fixed in the low refractive index layer, as well.

In the polysilsesquioxane, at least one or more silicon atoms in the structural units may be substituted with reactive groups, and furthermore, at least one or more silicon atoms in the structural units may be further substituted with non-reactive groups. Such a polysilsesquioxane can easily reduce the proportion of siloxane bonds exposed on the surface side of the low refractive index layer, thereby easily improving chemical resistance. In addition, the polysilsesquioxane substituted with non-reactive groups can easily suppress polymerization shrinkage of the low refractive index layer.

Examples of the non-reactive groups include a linear or branched alkyl group having 1 or more and 20 or less carbon atoms, a cyclohexyl group having 6 or more and 20 or less carbon atoms, and an aryl group having 6 or more and 20 or less carbon atoms.

The weight average molecular weight of the polysilsesquioxane is preferably 5000 or less, more preferably 4000 or less, and still more preferably 3000 or less, in order to make the dispersibility of the low refractive index particles good. The weight average molecular weight of the polysilsesquioxane is preferably 800 or more, more preferably 900 or more, and still more preferably 1000 or more, in order to increase bonding strength and storage modulus.

In the present specification, the weight average molecular weight means the average molecular weight in terms of standard polystyrene, as measured by GPC analysis.

### < <Hollow particles> >

In order to easily set the luminous reflectance Y value to the above range, the low refractive index layer preferably contains hollow particles.

The hollow particles refer to particles which each have an outer shell layer, have a hollow thereinside, surrounded by the outer shell layer, and include air in the hollow. The hollow particles are particles which each include air to thereby have a lowered refractive index proportional to the occupancy of the gas, as compared with the refractive index of the outer shell layer.

The material of the outer shell layer of the hollow particles may be an inorganic compound such as silica, magnesium fluoride, or an organic compound, but silica is preferable from the viewpoint of lowering the refractive index and strength. That is, the low refractive index layer preferably contains hollow silica particles as hollow particles.

Considering optical properties and mechanical strength, the lower limit of the average primary particle size of the hollow particles is preferably 50 nm or more, more preferably 65 nm or more, and the upper limit is preferably 100 nm or less, more preferably 80 nm or less.

Examples of the preferred range of the average primary particle size of the hollow particles include 50 nm or more and 100 nm or less, 50 nm or more and 80 nm or less, 65 nm or more and 100 nm or less, and 65 nm or more and 80 nm or less.

The average primary particle size of hollow particles, solid particles described later, and high refractive particles described later can be calculated by the following operations C1 to C3.

C1: A cross-section of the antireflective member is imaged with a TEM or STEM. The acceleration voltage of the TEM or STEM is preferably 10 kV or more and 30 kV or less, and the magnification is preferably 50,000 times or more and 300,000 times or less.

C2: Any 10 particles are extracted from the observed image and the particle size of each particle is calculated. The particle size is measured as the linear distance in a combination of two straight lines such that the linear distance between the two straight lines is maximum when the cross-section of the particle is sandwiched between two arbitrary parallel straight lines.

C3: The same operation is performed five times on an observation image of another screen of the same sample, and a value obtained from the number average of the particle size of 50 particles in total is defined as the average primary particle size of the particles.

The lower limit of the porosity of the hollow particles is preferably 5% or more, more preferably 10% or more, and still more preferably 20% or more from the viewpoint of lowering the refractive index, and the upper limit is preferably 80% or less, more preferably 70% or less, and still more preferably 60% or less from the viewpoint of strength.

The porosity of the hollow particle can be calculated by, for example, the following D1 to D3.
D1: Performing STEM observation or the like on the cross-section of the hollow particles, thereby measuring the diameter and the thickness of the outer shell portion excluding the void portion.
D2: Calculating the volume of the void portion of the hollow particles and the volume of the hollow particles when there is no void portion, assuming that the hollow particles are sphere. D3: Calculating the porosity according to the formula: {(volume of void portion of the hollow particles)/(volume of the hollow particles when there is no void portion)} × 100.

Examples of the preferred range of the porosity of the hollow particles include 5% or more and 80% or less, 5% or more and 70% or less, 5% or more and 60% or less, 10% or more and 80% or less, 10% or more and 70% or less, 10% or more and 60% or less, 20% or more and 80% or less, 20% or more and 70% or less, and 20% or more and 60% or less.

As the content of hollow particles increases, the refractive index of the low refractive index layer decreases. Therefore, the content of the hollow particles is preferably 100 parts by mass or more, more preferably 150 parts by mass or more, and still more preferably 175 parts by mass or more, based on 100 parts by mass of the binder resin.

On the other hand, when the content of the hollow particles with respect to the binder resin is too large, the hollow particles are easily exposed from the binder resin, and the amount of the binder resin binding the hollow particles decreases, and thus the mechanical strength such as scratch resistance of the low refractive index layer tends to decrease. For this reason, when the content of the hollow particles with respect to the binder resin is too large, it is difficult to set the "maximum value of coefficient of dynamic friction" and "difference between the coefficient of dynamic friction at the first outward path and the maximum value of coefficient of dynamic friction" to the above ranges. Therefore, the content of the hollow particles is preferably 400 parts by mass or less, more preferably 300 parts by mass or less, and still more preferably 250 parts by mass or less, based on 100 parts by mass of the binder resin.

Examples of the preferred range of the content of the hollow particles based on 100 parts by mass of the binder resin include 100 parts by mass or more and 400 parts by mass or less, 100 parts by mass or more and 300 parts by mass or less, 100 parts by mass or more and 250 parts by mass or less, 150 parts by mass or more and 400 parts by mass or less, 150 parts by mass or more and 300 parts by mass or less, 150 parts by mass or more and 250 parts by mass or less, 175 parts by mass or more and 400 parts by mass or less, 175 parts by mass or more and 300 parts by mass or less, and 175 parts by mass or more and 250 parts by mass or less.

The hollow particles preferably have surfaces coated with a silane coupling agent. The silane coupling agent preferably has a (meth)acryloyl group or an epoxy group, and more preferably has a methacryloyl group.

By subjecting the hollow particles to a surface treatment with a silane coupling agent, the affinity between the hollow particles and the binder resin is improved, and excessive aggregation of the hollow particles can be easily suppressed. For this reason, by subjecting the hollow particles to a surface treatment with a silane coupling agent, the "maximum value of coefficient of dynamic friction" and "difference between the coefficient of dynamic friction at the first outward path and the maximum value of coefficient of dynamic friction" can be easily set to the above ranges.

The surface of the solid particles described later is also preferably coated with a silane coupling agent in order to suppress excessive aggregation.

### < < Solid particles > >

The low refractive index layer preferably contains solid particles in addition to the hollow particles. By containing solid particles in addition to the hollow particles, the scratch resistance of the low refractive index layer can be improved, and the "maximum value of coefficient of dynamic friction" and "difference between the coefficient of dynamic friction at the first outward path and the maximum value of coefficient of dynamic friction" can be easily set to the above ranges.

The material of the solid particles is preferably inorganic compounds such as silica and magnesium fluoride, and more preferably silica.

The average primary particle size of the solid particles is preferably smaller than the average primary particle size of the hollow particles. The lower limit of the average primary particle size of the solid particles is preferably 5 nm or more, more preferably 10 nm or more, and the upper limit is preferably 20 nm or less, more preferably 15 nm or less.

Examples of the preferred range of the average primary particle size of the solid particles include 5 nm or more and 20 nm or less, 5 nm or more and 15 nm or less, 10 nm or more and 20 nm or less, and 10 nm or more and 15 nm or less.

The content of the solid particles is preferably 10 parts by mass or more, more preferably 50 parts by mass or more, more preferably 70 parts by mass or more, and more preferably 100 parts by mass or more, based on 100 parts by mass of the binder resin, from the viewpoint of further improving the scratch resistance.

On the other hand, when the content of the solid particles is too large, the solid particles are easily aggregated, and the amount of the binder resin covering the hollow particles decreases, which may reduce the scratch resistance. Therefore, the content of the solid particles is preferably 200 parts by mass or less, more preferably 150 parts by mass or less, based on 100 parts by mass of the binder resin.

Examples of the preferred range of the content of the solid particles based on 100 parts by mass of the binder resin include 10 parts by mass or more and 200 parts by mass or less, 10 parts by mass or more and 150 parts by mass or less, 50 parts by mass or more and 200 parts by mass or less, 50 parts by mass or more and 150 parts by mass or less, 70 parts by mass or more and 200 parts by mass or less, 70 parts by mass or more and 150 parts by mass or less, 100 parts by mass or more and 200 parts by mass or less, and 100 parts by mass or more and 150 parts by mass or less.

The content of the solid particles is preferably 30 parts by mass or more, preferably 40 parts by mass or more, based on 100 parts by mass of the hollow particles. By containing the solid particles in the above range with respect to the hollow particles, the solid particles fill the gaps between the hollow particles, making it more difficult for the hollow particles to move or fall out. Therefore, the scratch resistance of the low refractive index layer can be improved, and the "maximum value of coefficient of dynamic friction" and "difference between the coefficient of dynamic friction at the first outward path and the maximum value of coefficient of dynamic friction" can be easily set to the above ranges.

When the content of the solid particles with respect to the hollow particles is too large, the luminous reflectance Y value tends to be increased. Therefore, the content of the solid particles is preferably 80 parts by mass or less, more preferably 70 parts by mass or less, based on 100 parts by mass of the hollow particles.

Examples of the preferred range of the content of the solid particles based on 100 parts by mass of the hollow particles include 30 parts by mass or more and 80 parts by mass or less, 30 parts by mass or more and 70 parts by mass or less, 40 parts by mass or more and 80 parts by mass or less, and 40 parts by mass and 70 parts by mass or less.

The lower limit of the refractive index of the low refractive index layer is preferably 1.10 or more, more preferably 1.20 or more, more preferably 1.26 or more, more preferably 1.28 or more, and more preferably 1.30 or more, and the upper limit thereof is preferably 1.48 or less, more preferably 1.45 or less, more preferably 1.40 or less, more preferably 1.38 or less, and more preferably 1.35 or less.

In the present specification, the refractive index of the layers constituting the antireflective layer, such as the low refractive index layer and the high refractive index layer, means the value at the wavelength of 589.3 nm.

Examples of the preferred range of the refractive index of the low refractive index layer include 1.10 or more and 1.48 or less, 1.10 or more and 1.45 or less, 1.10 or more and 1.40 or less, 1.10 or more and 1.38 or less, 1.10 or more and 1.35 or less, 1.20 or more and 1.48 or less, 1.20 or more and 1.45 or less, 1.20 or more and 1.40 or less, 1.20 or more and 1.38 or less, 1.20 or more and 1.35 or less, 1.26 or more and 1.48 or less, 1.26 or more and 1.45 or less, 1.26 or more and 1.40 or less, 1.26 or more and 1.38 or less, 1.26 or more and 1.35 or less, 1.28 or more and 1.48 or less, 1.28 or more and 1.45 or less, 1.28 or more and 1.40 or less, 1.28 or more and 1.38 or less, 1.28 or more and 1.35 or less, 1.30 or more and 1.48 or less, 1.30 or more and 1.45 or less, 1.30 or more and 1.40 or less, 1.30 or more and 1.38 or less, and 1.30 or more and 1.35 or less.

The lower limit of the thickness of the low refractive index layer is preferably 80 nm or more, more preferably 85 nm or more, more preferably 90 nm or more, and the upper limit thereof is 150 nm or less, more preferably 110 nm or less, and more preferably 105 nm or less.

Examples of the preferred range of the thickness of the low refractive index layer include 80 nm or more and 150 nm or less, 80 nm or more and 110 nm or less, 80 nm or more and 105 nm or less, 85 nm or more and 150 nm or less, 85 nm or more and 110 nm or less, 85 nm or more and 105 nm or less, 90 nm or more and 150 nm or less, 90 nm or more and 110 nm or less, and 90 nm or more and 105 nm or less.

### < <Leveling agent> >

The low refractive index layer preferably contains a leveling agent. When the low refractive index layer contains a leveling agent, the surface shape of the low refractive index layer can be suppressed from becoming uneven, thus making it easier to improve the scratch resistance of the low refractive index layer. In addition, when the low refractive index layer contains a leveling agent, the surface lubricity of the low refractive index layer can be easily made good. For this reason, when the low refractive index layer contains a leveling agent, the "maximum value of coefficient of dynamic friction" and "difference between the coefficient of dynamic friction at the first outward path and the maximum value of coefficient of dynamic friction" can be easily set to the above ranges. In order to achieve the aforementioned effects, the leveling agent is preferably a reactive leveling agent.

Examples of the leveling agent include a silicone leveling agent and a fluorine leveling agent. The silicone leveling agent may contain a small amount of fluorine atoms. The fluorine leveling agent may contain a small amount of silicone atoms.

As the leveling agent, a reactive silicone leveling agent is preferably contained. That is, the low refractive index layer preferably contains a reaction product of a silicone leveling agent. The silicone leveling agent is preferable since it easily makes the scratch resistance of the low refractive index layer good. Then, the reaction product of the silicone leveling agent is fixed in the low refractive index layer, thus making it easier to sustain the aforementioned effects, which is preferable.

The reaction product of the silicone leveling agent preferably reacts with the binder resin composition, thereby being fixed in the low refractive index layer. For this reason, the silicone leveling agent preferably has reactive groups that can react with the binder resin composition. Examples of the reactive groups include a (meth)acryloyl group, a vinyl group, and an epoxy group. Among these, a (meth)acryloyl group is preferable.

The weight average molecular weight of the leveling agent is preferably 70,000 or less, and more preferably 65,000 or less, in order to make compatibility with other components and coatability good. When the weight average molecular weight of the leveling agent is too small, the leveling agent may not be eccentrically located on the surface of the low refractive index layer due to too good compatibility. For this reason, the weight average molecular weight of the leveling agent is preferably 3,000 or more, and more preferably 5,000 or more.

The lower limit of the content of the silicone leveling agent is preferably 2 parts by mass or more, more preferably 3 parts by mass or more, and still more preferably 4 parts by mass or more, and the upper limit thereof is preferably 15 parts by mass or less, more preferably 10 parts by mass or less, and still more preferably 6 parts by mass or less, with respect to 100 parts by mass of the binder resin.

By setting the content of the silicone leveling agent to the above range, a decrease in the scratch resistance of the low refractive index layer can be easily suppressed while imparting lubricity to the surface of the low refractive index layer, and therefore, the "maximum value of coefficient of dynamic friction" and "difference between the coefficient of dynamic friction at the first outward path and the maximum value of coefficient of dynamic friction" can be easily set to the above ranges.

As the leveling agent, a reactive fluorine leveling agent is preferably contained. That is, the low refractive index layer preferably contains a reaction product of a fluorine leveling agent. The fluorine leveling agent can easily lower the coefficient of dynamic friction. In particular, the fluorine leveling agent easily sets the slope of a regression line to the above range. Then, the reaction product of the fluorine-based compound is fixed in the low refractive index layer, thus making it easier to sustain the aforementioned effects, which is preferable.

The reaction product of the fluorine leveling agent preferably reacts with the binder resin, thereby being fixed in the low refractive index layer. For this reason, the fluorine leveling agent preferably has reactive groups that can react with the binder resin composition. Examples of the reactive groups include a (meth)acryloyl group, a vinyl group, and an epoxy group. Among these, a (meth)acryloyl group is preferable.

When the low refractive index layer contains a reaction product of a fluorine leveling agent, it is preferable to contain a cured product of polysilsesquioxane as the binder resin. The above combination can easily make the fluorine leveling agent eccentrically located on the surface of the low refractive index layer due to repulsion between silicon in the polysilsesquioxane and fluorine in the leveling agent.

The lower limit of the content of the fluorine leveling agent is preferably 2 parts by mass or more, more preferably 3 parts by mass or more, and still more preferably 4 parts by mass or more, and the upper limit thereof is preferably 18 parts by mass or less, more preferably 15 parts by mass or less, and still more preferably 13 parts by mass or less, with respect to 100 parts by mass of the binder resin.

By setting the content of the fluorine leveling agent to the above range, a decrease in the scratch resistance of the low refractive index layer can be easily suppressed while imparting lubricity to the surface of the low refractive index layer, and therefore, the "maximum value of coefficient of dynamic friction", "difference between the coefficient of dynamic friction at the first outward path and the maximum value of coefficient of dynamic friction", and "slope of a regression line" can be easily set to the above ranges.

### <<Additives>>

The low refractive index layer may further contain additives such as an anti-static agent, an antioxidant, a surfactant, a dispersant, a photostabilizer, and an ultraviolet absorber.

The low refractive index layer can be formed by applying and drying a coating solution for a low refractive index layer containing components constituting the low refractive index layer and solvents, and curing by irradiation with ionizing radiation as necessary.

### < <Solvent> >

Examples of the solvent include ketones such as acetone, methyl ethyl ketone, methyl isobutyl ketone (MIBK), and cyclohexanone; ethers such as dioxane and tetrahydrofuran; aliphatic hydrocarbons such as hexane; alicyclic hydrocarbons such as cyclohexane; aromatic hydrocarbons such as toluene and xylene; halogenated carbons such as dichloromethane and dichloroethane; esters such as methyl acetate, ethyl acetate, and butyl acetate; alcohols such as isopropanol, butanol, and cyclohexanol; cellosolves such as methyl cellosolve and ethyl cellosolve; glycol ethers such as propylene glycol monomethyl ether acetate; cellosolve acetates; sulfoxides such as dimethyl sulfoxide; amides such as dimethylformamide and dimethylacetamide; and a mixture of these.

The solvent of the coating solution for a low refractive index layer preferably contains a solvent with a low evaporation rate. By containing a solvent with a low evaporation rate as the solvent, it is easier for the leveling agent to be eccentrically located on the surface of the low refractive index layer, and the effects of the leveling agent can be more easily achieved.

In the present specification, the solvent with a low evaporation rate means a solvent with an evaporation rate of less than 100 when the evaporation rate of butyl acetate is 100. The evaporation rate of the solvent with a low evaporation rate is preferably 20 or more and 60 or less, more preferably 30 or more and 55 or less, and still more preferably 40 or more and 50 or less.

Examples of the solvent with a low evaporation rate include cyclohexanone (evaporation rate: 32) and 1-methoxy-2-propyl acetate (evaporation rate: 44).

The solvent of the coating solution for a low refractive index layer also preferably contains a solvent with a high evaporation rate in addition to the solvent with a low evaporation rate. By containing a solvent with a high evaporation rate, problems such as whitening caused by too slow drying can be easily suppressed.

In the present specification, the solvent with a high evaporation rate means a solvent with an evaporation rate of 100 or more when the evaporation rate of butyl acetate is 100. The evaporation rate of the solvent with a high evaporation rate is more preferably 120 or more and 300 or less, and still more preferably 150 or more and 220 or less.

Examples of the solvent with a high evaporation rate include methyl isobutyl ketone (evaporation rate: 160), toluene (evaporation rate: 200), and methyl ethyl ketone (evaporation rate: 370).

The mass ratio of the solvent with a low evaporation rate and the solvent with a high evaporation rate is preferably 90: 10 to 20:80, more preferably 80:20 to 50:50, and still more preferably 75:25 to 60:60.

### <<Drying conditions>>

The drying temperature of the coating solution for a low refractive index layer is preferably 45°C or higher and 70°C or lower, and more preferably 47°C or higher and 53°C or lower. By drying at a relatively low temperature in this manner, the surface of the low refractive index layer can be easily suppressed from becoming uneven, thus making it easier to set the "maximum value of coefficient of dynamic friction" and "difference between the coefficient of dynamic friction at the first outward path and the maximum value of coefficient of dynamic friction" to the above ranges.

The wind speed of the drying air for the coating solution for a low refractive index layer is preferably 0.1 m/s or more and 10 m/s or less, more preferably 0.3 m/s or more and 7 m/s or less.

The coating solution for a low refractive index layer may be dried in two stages. Examples of the two stage drying include the following (1) and (2), and a combination thereof. Drying in two stages makes it easier to suppress the surface of the low refractive index layer from becoming uneven.
(1) The wind speed of the drying air is changed between the first stage drying and the second stage drying. Preferably, "wind speed in the first stage < wind speed in the second stage".
(2) The drying temperature is changed between the first stage drying and the second stage drying. Preferably, "drying temperature in the first stage < drying temperature in the second stage".

### <Hardcoat layer>

The antireflective member of the present disclosure has a hardcoat layer between the substrate and the low refractive index layer. By having a hardcoat layer between the substrate and the low refractive index layer, the scratch resistance of the antireflective member can be improved, and the "maximum value of coefficient of dynamic friction" and "difference between the coefficient of dynamic friction at the first outward path and the maximum value of coefficient of dynamic friction" can be easily set to the above ranges.

The hardcoat layer preferably contains, as the main component, a cured product of a curable resin composition such as a thermosetting resin composition or an ionizing radiation-curable resin composition, and more preferably contains a cured product of an ionizing radiation-curable resin composition as the main component. The main component means 50% by mass or more, preferably 70% by mass or more, more preferably 90% by mass or more, of the resin component constituting the hardcoat layer.

Examples of the curable resin composition such as a thermosetting resin composition or an ionizing radiation-curable resin composition include those exemplified for the low refractive index layer. The ionizing radiation-curable compound used for the hardcoat layer preferably includes a polyfunctional (meth)acrylate-based compound.

The lower limit of the thickness of the hardcoat layer is preferably 0.5 µm or more, more preferably 1 µm or more, and the upper limit is preferably 30 µm or less, more preferably 10 µm or less. By setting the thickness of the hardcoat layer within the above range, the occurrence of cracks during processing such as cutting can be easily suppressed while improving the scratch resistance.

Examples of the preferred range of the thickness of the hardcoat layer include 0.5 µm or more and 30 µm or less, 0.5 µm or more and 10 µm or less, 1 µm or more and 30 µm or less, and 1 µm or more and 10 µm or less.

The hardcoat layer may further contain additives such as a leveling agent, an anti-static agent, an antioxidant, a surfactant, a dispersant, a photostabilizer, and an ultraviolet absorber.

### <Other layers>

The antireflective member may have other layers, such as a high refractive index layer and an anti-static layer.

By having the high refractive index layer, the luminous reflectance Y value of the antireflective member can be easily reduced. The high refractive index layer is preferably between the hardcoat layer and the low refractive index layer.

### < <High refractive index layer> >

The high refractive index layer can be formed, for example, from a coating solution for a high refractive index layer containing a binder resin composition and high refractive index particles. That is, the high refractive index layer preferably contains a binder resin and high refractive index particles.

The high refractive index layer preferably contains a cured product of a curable resin composition as the binder resin. The ratio of the cured product of the curable resin composition based on the total binder resin in the high refractive index layer is preferably 50% by mass or more, more preferably 70% by mass or more, more preferably 90% by mass or more, and most preferably 100% by mass.

Examples of the curable resin composition for the high refractive index layer include a thermosetting resin composition and an ionizing radiation-curable resin composition, and an ionizing radiation-curable resin composition is preferable. Examples of the curable resin composition such as a thermosetting resin composition or an ionizing radiation-curable resin composition include those exemplified for the low refractive index layer. The ionizing radiation-curable compound used for the high refractive index layer preferably includes a polyfunctional (meth)acrylate-based compound.

Examples of the high refractive index particles include antimony pentoxide, zinc oxide, titanium oxide, cerium oxide, tin-doped indium oxide, antimony-doped tin oxide, yttrium oxide, and zirconium oxide.

The average primary particle size of the high refractive index particles is preferably 2 nm or more, more preferably 5 nm or more, and still more preferably 10 nm or more. The average primary particle size of the high refractive index particles is preferably 200 nm or less, more preferably 100 nm or less, more preferably 80 nm or less, more preferably 60 nm or less, and more preferably 30 nm or less, from the viewpoint of suppressing whitening and transparency.

Examples of the preferred range of the average primary particle size of the high refractive index particles include 2 nm or more and 200 nm or less, 2 nm or more and 100 nm or less, 2 nm or more and 80 nm or less, 2 nm or more and 60 nm or less, 2 nm or more and 30 nm or less, 5 nm or more and 200 nm or less, 5 nm or more and 100 nm or less, 5 nm or more and 80 nm or less, 5 nm or more and 60 nm or less, 5 nm or more and 30 nm or less, 10 nm or more and 200 nm or less, 10 nm or more and 100 nm or less, 10 nm or more and 80 nm or less, 10 nm or more and 60 nm or less, and 10 nm or more and 30 nm or less.

The lower limit of the content of the high refractive index particles is preferably 100 parts by mass or more, more preferably 150 parts by mass or more, and still more preferably 250 parts by mass or more, and the upper limit thereof is preferably 500 parts by mass or less, more preferably 400 parts by mass or less, and still more preferably 350 parts by mass or less, based on 100 parts by mass of the binder resin.

Examples of the preferred range of the content of the high refractive index particle based on 100 parts by mass of the binder resin include 100 parts by mass or more and 500 parts by mass or less, 100 parts by mass or more and 400 parts by mass or less, 100 parts by mass or more and 350 parts by mass or less, 150 parts by mass or more and 500 parts by mass or less, 150 parts by mass or more and 400 parts by mass or less, 150 parts by mass or more and 350 parts by mass or less, 250 parts by mass or more and 500 parts by mass or less, 250 parts by mass or more and 400 parts by mass or less, and 250 parts by mass or more and 350 parts by mass or less.

The lower limit of the refractive index of the high refractive index layer is preferably 1.53 or more, more preferably 1.54 or more, more preferably 1.55 or more, more preferably 1.56 or more, and the upper limit thereof is preferably 1.85 or less, more preferably 1.80 or less, more preferably 1.75 or less, more preferably 1.70 or less.

Examples of the preferred range of the refractive index of the high refractive index layer include 1.53 or more and 1.85 or less, 1.53 or more and 1.80 or less, 1.53 or more and 1.75 or less, 1.53 or more and 1.70 or less, 1.54 or more and 1.85 or less, 1.54 or more and 1.80 or less, 1.54 or more and 1.75 or less, 1.54 or more and 1.70 or less, 1.55 or more and 1.85 or less, 1.55 or more and 1.80 or less, 1.55 or more and 1.75 or less, 1.55 or more and 1.70 or less, 1.56 or more and 1.85 or less, 1.56 or more and 1.80 or less, 1.56 or more and 1.75 or less, and 1.56 or more and 1.70 or less.

The upper limit of the thickness of the high refractive index layer is preferably 200 nm or less, more preferably 180 nm or less, still more preferably 150 nm or less, and the lower limit is preferably 50 nm or more, more preferably 70 nm or more.

Examples of the preferred range of the thickness of the high refractive index layer include 50 nm or more and 200 nm or less, 50 nm or more and 180 nm or less, 50 nm or more and 150 nm or less, 70 nm or more and 200 nm or less, 70 nm or more and 180 nm or less, and 70 nm or more and 150 nm or less.

The high refractive index layer may further contain additives such as a leveling agent, an anti-static agent, an antioxidant, a surfactant, a dispersant, a photostabilizer, and an ultraviolet absorber.

### <Element ratio >

In the antireflective member of the present disclosure, the element ratio obtained by analyzing the surface area of the low refractive index layer by X-ray photoelectron spectroscopy preferably satisfies the following condition 1 or condition 2. In the present specification, the "X-ray photoelectron spectroscopy" may be referred to as "XPS".

In the present specification, the element ratio means the average value of the measurement values at 2 locations.

### < <Element ratio condition 1 > >

The ratio of F elements is 19.0 atomic% or more and 27.0 atomic% or less, as obtained by analyzing the surface area of the low refractive index layer by X-ray photoelectron spectroscopy.

The ratio of F elements is more preferably 20.0 atomic% or more and 25.0 atomic% or less.

By setting the ratio of F elements to the above range, a decrease in the scratch resistance of the low refractive index layer can be easily suppressed while imparting lubricity to the surface of the low refractive index layer, and therefore, the "maximum value of coefficient of dynamic friction", "difference between the coefficient of dynamic friction at the first outward path and the maximum value of coefficient of dynamic friction", and "slope of a regression line" can be easily set to the above ranges. The F elements are preferably F elements derived from the fluorine leveling agent.

### < <Element ratio condition 2> >

The ratio of Si elements attributed to an organosilicon compound is 4.8 atomic% or more and 15.0 atomic% or less, as obtained by analyzing the surface area of the low refractive index layer by X-ray photoelectron spectroscopy.

The ratio of Si elements attributed to an organosilicon compound is more preferably 5.0 atomic% or more and 12.0 atomic% or less.

By setting the ratio of Si elements attributed to an organosilicon compound to the above range, a decrease in the scratch resistance of the low refractive index layer can be easily suppressed while imparting lubricity to the surface of the low refractive index layer, and therefore, the "maximum value of coefficient of dynamic friction", "difference between the coefficient of dynamic friction at the first outward path and the maximum value of coefficient of dynamic friction", and "slope of a regression line" can be easily set to the above ranges. The Si elements attributed to an organosilicon compound are preferably Si elements derived from the silane coupling agent and/or the silicone leveling agent.

### <Optical characteristics>

The antireflective member preferably has a total light transmittance of 70% or more, more preferably 80% or more, and still more preferably 85% or more, in accordance with JIS K7361-1:1997.

The light incident surface for measuring total light transmittance and haze, which will be described later, is the opposite side to the surface on the low refractive index layer side.

The antireflective member preferably has a haze of 1.0% or less, more preferably 0.7% or less, and still more preferably 0.5% or less, in accordance with JIS K7136:2000. By setting the haze to 1.0% or less, the image resolution can be easily improved. The lower limit value of haze is not particularly limited, but is usually 0.1% or more.

Examples of the preferred range of the haze of the antireflective member include 0.1% or more and 1.0% or less, 0.1% or more and 0.7% or less, and 0.1% or more and 0.5% or less.

### <Water contact angle>

The antireflective member preferably has a water contact angle on the surface on the low refractive index layer side of 90 degrees or more, more preferably 95 degrees or more, and still more preferably 100 degrees or more, in order to enhance anti-fouling properties.

When the water contact angle on the surface on the low refractive index layer side is too large, the scratch resistance of the low refractive index layer may be reduced due to an increased content of the leveling agent with respect to the total amount of the low refractive index layer. For this reason, the water contact angle on the surface on the low refractive index layer side is preferably 120 degrees or less, and more preferably 115 degrees or less.

In the present specification, the "water contact angle" is determined by dropping 2.0 µL of pure water and measuring the static contact angle 2 seconds after the dropping according to the θ/2 method. In addition, in the present specification, the water contact angle is determined by performing measurements at 10 locations and averaging the measurement values at 8 locations excluding the minimum value and the maximum value.

### <Pencil hardness>

The surface of the antireflective member on the resin layer side preferably has a pencil hardness of 2H or higher, and more preferably 3H or higher, in order to enhance scratch resistance.

Note that, only by increasing the pencil hardness of the antireflective member, it is difficult to set the "maximum value of coefficient of dynamic friction" and "difference between the coefficient of dynamic friction at the first outward path and the maximum value of coefficient of dynamic friction" to the above ranges. In order to easily set the "maximum value of coefficient of dynamic friction" and "difference between the coefficient of dynamic friction at the first outward path and the maximum value of coefficient of dynamic friction" to the above ranges, it is important to satisfy one or more conditions selected from the group consisting of the above a1 to a7, for example.

In the present specification, the pencil hardness is measured in accordance with JIS K5600-5-4:1999 under the conditions with a load of 500 g and a rate of 1.4 mm/sec.

In addition, a pencil hardness test is performed five times on the measurement sample for pencil hardness, and the hardness when no appearance abnormality, such as scratches, is observed four or more times is defined as the pencil hardness value of each sample. For example, when the test is performed five times using a 2H pencil and no appearance abnormality occurs four times, then the pencil hardness of the sample is 2H. Discoloration is not included in the appearance abnormality, and only scratches and dents are checked.

### <Surface shape>

The surface of the antireflective member on the low refractive index layer side preferably has an arithmetic mean height Sa of 20 nm or less, more preferably 15 nm or less, and still more preferably 10 nm or less, in accordance with ISO 25178-2:2012. The lower limit of Sa is not particularly limited, but is preferably 0.5 nm or more.

Examples of the preferred range of Sa include 0.5 nm or more and 20 nm or less, 0.5 nm or more and 15 nm or less, and 0.5 nm or more and 10 nm or less.

In the present specification, the Sa is determined by performing measurements at 10 locations and averaging the measurement values at 8 locations excluding the minimum value and the maximum value.

The Sa is preferably measured using an atomic force microscope (AFM). Examples of the AFM include an atomic force microscope "trade name: NanoScope V" manufactured by Bruker Corporation. The resolution required for the measuring instrument is preferably 0.01 µm or less, more preferably 0.005 µm or less in both the horizontal direction and the vertical direction.

### [AFM measurement conditions]

Device: NanoScope V + MultiMode 8 manufactured by Bruker Corporation
Mode: tapping mode
Probe: RTESP300 manufactured by Bruker Corporation (resonance frequency: 300 kHz, spring constant: 40 N/m)
Number of pixels: 512 × 512
Scanning speed: 0.6 to 1 Hz
Measurement field of view: 5 µm × 5 µm

### <AFM analysis conditions>

Tilt correction: plane fit

### <Size, shape, and the like>

The antireflective member may be in the form of a single sheet cut into a predetermined size, or may be in the form of a roll obtained by winding a long sheet. The size of the single sheet is not particularly limited, but the maximum diameter is about 2 inches or more and 500 inches or less. The "maximum diameter" means the maximum length of any two points of the antireflective member when connected. For example, when the antireflective member is rectangular, the diagonal line of the rectangle is the maximum diameter. When the antireflective member is circular, the diameter of the circle is the maximum diameter.

The width and length of the roll are not particularly limited, but generally, the width is 500 mm or more and 3000 mm or less and the length is about 500 m or more and 5000 m or less. The antireflective member in the form of a roll may be cut into a single sheet according to the size of an image display device or the like. At the time of cutting, it is preferable to exclude the end portion of the roll where the physical properties are not stable.

The shape of the single sheet is also not particularly limited, and may be, for example, a polygonal shape (triangular shape, quadrangular shape, pentagonal shape, or the like) or a round shape, or may be a randomly irregular shape. More specifically, in a case where the antireflective member has a quadrangular shape, the aspect ratio is not particularly limited as long as it is not problematic in terms of a display screen. For example, the aspect ratio may be horizontal: vertical = 1:1, 4:3, 16:10, 16:9, 2:1, or the like.

The surface shape of the antireflective member on the side opposite to the uneven surface is not particularly limited, but is preferably substantially smooth. "Substantially smooth" means that the arithmetic mean roughness Ra at a cutoff value of 0.8 mm is less than 0.03 µm, preferably 0.02 µm or less, in accordance with JIS B0601:1994.

### [Polarizing plate]

A polarizing plate of the present disclosure is a polarizing plate having a polarizer, a first transparent protective plate disposed on one side of the polarizer, and a second transparent protective plate disposed on the other side of the polarizer, wherein any one of the first transparent protective plate and the second transparent protective plate is the antireflective member of the present disclosure described above, and the antireflective member is disposed such that the surface of the antireflective member on the substrate side faces the polarizer side.

The polarizing plate is used, for example, for imparting antireflective properties in combination with a λ/4 phase difference plate. In this case, the λ/4 phase difference plate is disposed on the display element of an image display device, and the polarizing plate is disposed on the viewer side to the λ/4 phase difference plate.

In the case where the polarizing plate is for liquid crystal display devices, it is used for imparting functions of the liquid crystal shutter. In this case, in the liquid crystal display device, a lower polarizing plate, a liquid crystal display element, and an upper polarizing plate are disposed in this order from the backlight side, so that the absorption axis of the polarizer of the lower polarizing plate and the absorption axis of the polarizer of the upper polarizing plate are orthogonal to each other. In the configuration of the liquid crystal display device, the polarizing plate of the present disclosure can be used as the upper polarizing plate and the lower polarizing plate, and it is preferable to use the polarizing plate of the present disclosure as the upper polarizing plate. In the upper polarizing plate, it is preferable to use the antireflective member of the present disclosure as the transparent protective plate on the light-emitting surface side of the polarizer. In the lower polarizing plate, it is preferable to use the antireflective member of the present disclosure as the transparent protective plate on the light incident surface side of the polarizer.

### <Transparent protective plate>

The polarizing plate of the present disclosure includes the antireflective member of the present disclosure described above, as at least one of the first transparent protective plate and the second transparent protective plate. In a preferred embodiment, both the first transparent protective plate and the second transparent protective plate include the antireflective member of the present disclosure described above.

When one of the first transparent protective plate and the second transparent protective plate includes the antireflective member of the present disclosure, the other transparent protective plate is preferably an optically isotropic transparent protective plate.

In the present specification, the optically isotropy refers to an in-plane phase difference of less than 20 nm, preferably 10 nm or less, more preferably 5 nm or less. Triacetyl cellulose (TAC) films can easily impart optically isotropy.

When one of the first transparent protective plate and the second transparent protective plate includes the antireflective member of the present disclosure, it is preferable that the transparent protective plate on the light-emitting side includes the antireflective member of the present disclosure described above.

### <Polarizer>

Examples of the polarizer include a sheet-type polarizer formed by stretching a film stained with iodine or the like, such as polyvinyl alcohol films, polyvinyl formal films, polyvinyl acetal films, and ethylene-vinyl acetate copolymer saponification films; a wire grid polarizer composed of many metal wires aligned in parallel; a coated polarizer coated with lyotropic liquid crystal and dichroic guest-host material; a multilayer thin film-type polarizer, and the like. Such a polarizer may be a reflective polarizer having a function of reflecting polarization components that do not transmit.

### [Image display panel]

An image display panel of the present disclosure is an image display panel having a display element and an optical film disposed on the light-emitting surface side of the display element, wherein the image display panel includes the antireflective member of the present disclosure described above as the optical film, the antireflective member is disposed such that the surface thereof on the low refractive index layer side faces the opposite side to the display element, and the antireflective member is disposed on the outermost surface (see Fig. 3).

Examples of display elements include liquid crystal display elements, EL display elements such as organic EL display elements and inorganic EL display elements, plasma display elements, and LED display elements such as micro LED display elements. These display elements may have a touch panel function inside the display element.

Examples of the liquid crystal display method of the liquid crystal display element include an IPS method, a VA method, a multi-domain method, an OCB method, an STN method, and a TSTN method.

The image display panel of the present disclosure may be an image display panel with a touch panel having the touch panel between the display element and the antireflective member. In this case, the antireflective member may be disposed on the outermost surface of the image display panel with the touch panel, and the surface of the antireflective member on the low refractive index layer side may be disposed so as to face the side opposite to the display element.

The size of the image display panel is not particularly limited, but the maximum diameter is about 2 inches or more and 500 inches or less. The maximum diameter refers to the maximum length of any two points within the image display panel when connected.

### [Image display device]

An image display device of the present disclosure includes the image display panel of the present disclosure described above, and the antireflective member is disposed on the outermost surface.

The image display device of the present disclosure preferably further includes a drive control unit electrically connected to the image display panel and a housing that accommodates the image display panel, the drive control unit, and others.

When the display element is a liquid crystal display element, the image display device of the present disclosure requires a backlight. The backlight is disposed on the opposite side to the light-emitting surface side of the liquid crystal display element.

The size of the image display device is not particularly limited, but the maximum diameter of the effective display region is about 2 inches or more and 500 inches or less.

The effective display region of an image display device is an area in which an image can be displayed. For example, when the image display device has a housing that surrounds the display element, the region inside the housing becomes the effective display region.

The maximum diameter of the effective display region refers to the maximum length of any two points within the effective display region when connected. For example, when the effective display region is rectangular, the diagonal line of the rectangle is the maximum diameter. When the effective display region is circular, the diameter of the circle is the maximum diameter.

### [Antireflective article]

The antireflective article of the present disclosure includes the aforementioned antireflective member on a member disposed such that a surface of the antireflective member on the low refractive index layer side is disposed so as to face the opposite side to the member, the antireflective member being disposed on an outermost surface.

The member and the antireflective member are preferably laminated via an adhesive layer.

Examples of the member include an instrument panel, a watch, a showcase, a shop window, and a window. The member may be transparent or non-transparent, and the color tone is also not particularly limited.

### [Method for selecting antireflective member]

The method for selecting an antireflective member of the present disclosure includes determining whether or not the following (1) to (3) are satisfied, and selecting one that satisfies the following (1) to (3):
(1) being an antireflective member having a hardcoat layer and a low refractive index layer on a substrate in the order presented;
(2) having a luminous reflectance Y value of 0.60% or less, as measured at an incident angle of light of 5 degrees from a side having the low refractive index layer with respect to the substrate; and
(3) having a maximum value of coefficient of dynamic friction from a first outward path to a 20,000th outward path, as calculated by the following first measurement, of 0.85 or less:
   <first measurement>
   the antireflective member is fixed on a stand that can travel back and forth in the horizontal direction; the antireflective member is fixed to the stand such that the substrate side faces the stand side; furthermore, a cylindrical felt member with a bottom diameter of 12.7 mm is brought into contact with the surface of the antireflective member on the low refractive index layer side; with the felt member in a fixed position and with a load of 1.47 N applied to the antireflective member by the felt member, the stand to which the antireflective member is fixed is moved back and forth in the horizontal direction at a rate of 100 mm/sec for a distance of 50 mm for an outward path and 50 mm for a homeward path; the back-and-forth movement is performed 20,000 times; in each outward path of the 20,000 back-and-forth movements, a frictional force in the moving direction applied to the felt member is measured for every 0.02 seconds; friction forces at 15 points measured from 0.17 seconds to 0.45 seconds out of 0 seconds to 0.50 seconds, which is a moving time for each outward path, are considered to be dynamic friction forces; based on the dynamic friction forces at 15 points, the average value of dynamic friction force for each outward path is calculated; and the average value of dynamic friction force for each outward path is divided by the load to calculate the coefficient of dynamic friction from the first outward path to the 20,000th outward path.

The method for selecting an antireflective member of the present disclosure can efficiently select an antireflective member capable of suppressing scratches and discoloration when repeatedly touched with a finger, by selecting an antireflective member that satisfies the above (1) to (3).

A preferred embodiment of the above (1) to (3) is in accordance with the preferred embodiment of the antireflective member of the present disclosure described above.

With respect to the above (1), for example, "being an antireflective member having a hardcoat layer, a high refractive index layer, and a low refractive index layer on a substrate in the order presented" is preferable.

With respect to the above (2), for example, the luminous reflectance Y value is preferably 0.50% or less, and more preferably 0.40% or less.

With respect to the above (3), for example, the maximum value of coefficient of dynamic friction is preferably 0.80 or less, and more preferably 0.78 or less.

Preferably, the method for selecting an antireflective member of the present disclosure further has an additional determination condition. Examples of the additional determination condition include one or more selected from the group consisting of the preferred embodiments exemplified in the antireflective member of the present disclosure described above.

Specific examples of the additional determination condition include the following (4) to (8). That is, the method for selecting an antireflective member of the present disclosure preferably has one or more selected from the group consisting of the following determination conditions (4) to (8). A preferred embodiment of the following (4) to (8) is in accordance with the preferred embodiment of the antireflective member of the present disclosure described above:
(4) having, with respect to the first measurement, a difference between the coefficient of dynamic friction at the first outward path and the maximum value of coefficient of dynamic friction of 0.60 or less;
(5) having a slope of a regression line, as calculated by the least squares method based on the following first scatter diagram, of 8.0 × 10⁻⁵ or less:
   <first scatter diagram>
   a scatter diagram, with respect to the first measurement, in which plotting is made with the number of outward paths on the horizontal axis and the coefficient of dynamic friction from the first outward path to the 2000th outward path on the vertical axis;
(6) having a ratio of F elements of 19.0 atomic% or more and 27.0 atomic% or less, as obtained by analyzing the surface area of the low refractive index layer by X-ray photoelectron spectroscopy;
(7) having a ratio of Si elements attributed to an organosilicon compound of 4.8 atomic% or more and 15.0 atomic% or less, as obtained by analyzing the surface area of the low refractive index layer by X-ray photoelectron spectroscopy; and
(8) having a Sa on the surface on the low refractive index layer side of 20 nm or less.

The present disclosure includes the following [1] to [16].
[1] An antireflective member comprising a hardcoat layer and a low refractive index layer on a substrate in the order presented, wherein the antireflective member has
   a luminous reflectance Y value of 0.60% or less, as measured at an incident angle of light of 5 degrees from the low refractive index layer side, and
   a maximum value of coefficient of dynamic friction from a first outward path to a 20,000th outward path, as calculated by the following first measurement, of 0.85 or less: <first measurement>
   the antireflective member is fixed on a stand that can travel back and forth in a horizontal direction; the antireflective member is fixed to the stand such that the substrate side faces the stand side; furthermore, a cylindrical felt member with a bottom diameter of 12.7 mm is brought into contact with a surface of the antireflective member on the low refractive index layer side; with the felt member in a fixed position and with a load of 1.47 N applied to the antireflective member by the felt member, the stand to which the antireflective member is fixed is moved back and forth in a horizontal direction at a rate of 100 mm/sec for a distance of 50 mm for an outward path and 50 mm for a homeward path; the back-and-forth movement is performed 20,000 times; in each outward path of the 20,000 back-and-forth movements, a frictional force in a moving direction applied to the felt member is measured for every 0.02 seconds; friction forces at 15 points measured from 0.17 seconds to 0.45 seconds out of 0 seconds to 0.50 seconds, which is a moving time for each outward path, are considered to be dynamic friction forces; based on the dynamic friction forces at 15 points, an average value of dynamic friction force for each outward path is calculated; and the average value of dynamic friction force for each outward path is divided by the load to calculate the coefficient of dynamic friction from a first outward path to a 20,000th outward path.
[2] The antireflective member according to [1], wherein the maximum value of coefficient of dynamic friction is 0.35 or more and 0.85 or less.
[3] The antireflective member according to [1] or [2], wherein with respect to the first measurement, a difference between the coefficient of dynamic friction at the first outward path and the maximum value of coefficient of dynamic friction is 0.60 or less.
[4] The antireflective member according to any of [1] to [3], wherein a slope of a regression line, as calculated by a least squares method based on the following first scatter diagram, is 8.0 × 10⁻⁵ or less:
   <first scatter diagram>
   a scatter diagram, with respect to the first measurement, in which plotting is made with the number of outward paths on a horizontal axis and the coefficient of dynamic friction from a first outward path to a 2000th outward path on a vertical axis.
[5] The antireflective member according to any of [1] to [4], wherein the low refractive index layer contains a binder resin and hollow particles.
[6] The antireflective member according to [5], comprising, as the binder resin, a cured product of a bifunctional or higher functional and trifunctional or lower functional (meth)acrylate-based compound.
[7] The antireflective member according to [5], comprising, as the binder resin, a cured product of polysilsesquioxane.
[8] The antireflective member according to any of [5] to [7], comprising, as the hollow particles, hollow silica particles.
[9] The antireflective member according to any of [1] to [8], wherein a ratio of F elements is 19.0 atomic% or more and 27.0 atomic% or less, as obtained by analyzing a surface area of the low refractive index layer by X-ray photoelectron spectroscopy.
[10] The antireflective member according to any of [1] to [8], wherein a ratio of Si elements attributed to an organosilicon compound is 4.8 atomic% or more and 15.0 atomic% or less, as obtained by analyzing a surface area of the low refractive index layer by X-ray photoelectron spectroscopy.
[11] The antireflective member according to claim 1, having a haze of 1.0% or less according to JIS K7136:2000.
[12] A polarizing plate comprising a polarizer, a first transparent protective plate disposed on one side of the polarizer, and a second transparent protective plate disposed on the other side of the polarizer, wherein any one of the first transparent protective plate and the second transparent protective plate is the antireflective member according to any of [1] to [11], and the antireflective member is disposed such that a surface thereof on the substrate side faces the polarizer side.
[13] An image display panel comprising a display element and an optical film disposed on a light-emitting surface side of the display element, wherein the image display panel comprises the antireflective member according to any of [1] to [11] as the optical film, the antireflective member is disposed such that a surface thereof on the low refractive index layer side faces the opposite side to the display element, and the antireflective member is disposed on an outermost surface.
[14] An image display device comprising the image display panel according to [13], the antireflective member being disposed on an outermost surface.
[15] An antireflective article, wherein the antireflective member according to any of [1] to [11] is disposed on a member such that a surface thereof on the low refractive index layer side faces the opposite side to the member, and the antireflective member is disposed on an outermost surface.
[16] A method for selecting an antireflective member, the method comprising:
   determining whether or not the following (1) to (3) are satisfied, and selecting one that satisfies the following (1) to (3):
      (1) being an antireflective member comprising a hardcoat layer and a low refractive index layer on a substrate in the order presented;
      (2) having a luminous reflectance Y value of 0.60% or less, as measured at an incident angle of light of 5 degrees from a side having the low refractive index layer with respect to the substrate; and
      (3) having a maximum value of coefficient of dynamic friction from a first outward path to a 20,000th outward path, as calculated by the following first measurement, of 0.85 or less: <first measurement>
   the antireflective member is fixed on a stand that can travel back and forth in a horizontal direction; the antireflective member is fixed to the stand such that the substrate side faces the stand side; furthermore, a cylindrical felt member with a bottom diameter of 12.7 mm is brought into contact with a surface of the antireflective member on the low refractive index layer side; with the felt member in a fixed position and with a load of 1.47 N applied to the antireflective member by the felt member, the stand to which the antireflective member is fixed is moved back and forth in a horizontal direction at a rate of 100 mm/sec for a distance of 50 mm for an outward path and 50 mm for a homeward path; the back-and-forth movement is performed 20,000 times; in each outward path of the 20,000 back-and-forth movements, a frictional force in a moving direction applied to the felt member is measured for every 0.02 seconds; friction forces at 15 points measured from 0.17 seconds to 0.45 seconds out of 0 seconds to 0.50 seconds, which is a moving time for each outward path, are considered to be dynamic friction forces; based on the dynamic friction forces at 15 points, an average value of dynamic friction force for each outward path is calculated; and the average value of dynamic friction force for each outward path is divided by the load to calculate the coefficient of dynamic friction from a first outward path to a 20,000th outward path.

### Examples

Next, the present disclosure will be described in more detail with reference to Examples, but the present disclosure is not limited by these Examples. "Parts" and "%" are based on mass unless otherwise specified.

### 1. Measurement and evaluation

The antireflective members of Examples and Comparative Examples were measured and evaluated as follows.

The atmosphere during each measurement and evaluation was set at a temperature of 23 ± 5°C and a relative humidity of 40% or more and 65% or less. Before starting each measurement and evaluation, the target sample was exposed to the atmosphere for 30 minutes or more and 60 minutes or less, and then the measurement and evaluation were performed.

The sample used for each measurement and evaluation can be prepared by cutting the antireflective members of Examples and Comparative Examples. The cutting site was selected from random sites after visually confirming that there were no abnormal points such as dust and scratches.

### 1-1. Coefficient of dynamic friction

The antireflective members of Examples and Comparative Examples were cut into 8 cm × 3 cm to prepare samples for measuring the coefficient of dynamic friction.

The substrate side of the sample was pasted and fixed to a stand of a surface property measuring instrument. Specifically, the four sides of the sample were pasted to the stand using "Cellotape (R)" from Nichiban Co., Ltd.. The stand is a stand that can travel back and forth in the horizontal direction. As the surface property measuring instrument, the trade name "HEIDON TYPE-14FW" from Shinto Scientific Co., Ltd. was used.

A felt member ("Jumbo Wearaser (TM), product number: CS-7" from TABER Industries, wool felt with a wool content of 95% by mass or more and a density of 0.39 g/cm³ or more and 0.43 g/cm³ or less) was brought into contact with the surface of the sample on the low refractive index layer side. As the felt member, cylindrical felt with a bottom diameter of 12.7 mm was used. The bottom surface of the felt member corresponds to the contact surface between the felt member and the sample.

With the felt member in a fixed position and with a load of 1.47 N applied to the sample by the felt member, the stand to which the sample was fixed was moved back and forth in the horizontal direction at a rate of 100 mm/sec for a distance of 50 mm for an outward path and 50 mm for a homeward path. The above movement was performed 20,000 times. In each outward path of the 20,000 back-and-forth movements, a frictional force in the moving direction applied to the felt member was measured for every 0.02 seconds. Friction forces at 15 points measured from 0.17 seconds to 0.45 seconds out of 0 seconds to 0.50 seconds, which is a moving time for each outward path, were considered to be dynamic friction forces. Based on the dynamic friction forces at 15 points, the average value of dynamic friction force for each outward path was calculated.

The average value of dynamic friction force for each outward path was divided by the load to calculate the coefficient of dynamic friction from the first outward path to the 20,000th outward path. Then, the maximum value of coefficient of dynamic friction from the first outward path to the 20,000th outward path was calculated. Furthermore, the difference between the coefficient of dynamic friction at the first outward path and the maximum value of coefficient of dynamic friction was calculated. Moreover, the slope of a regression line in the text of the specification was calculated. Note that the "maximum value of coefficient of dynamic friction", "difference between the coefficient of dynamic friction at the first outward path and the maximum value of coefficient of dynamic friction", and "slope of a regression line" are determined by performing measurements on three samples once each and averaging the three values obtained.

In Table 1, the "maximum value of coefficient of dynamic friction" is denoted as "Maximum value", the "difference between the coefficient of dynamic friction at the first outward path and the maximum value of coefficient of dynamic friction" as "Difference", and the "slope of a regression line" as "Slope".

### 1-2. Luminous reflectance Y value

The antireflective members of Examples and Comparative Examples were cut into 5 cm × 5 cm. The substrate side of the cut antireflective member was pasted to a black plate (manufactured by Kuraray Co., Ltd., trade name: Comoglass DFA2CG 502K (black) Series, thickness 2 mm) having a size of vertical 5 cm × horizontal 5 cm through an optically transparent pressure-sensitive adhesive sheet (Panac Co., Ltd., trade name: Panaclean PD-S1) to prepare a sample.

Light was incident on the sample from a direction of 5 degrees when the direction perpendicular to the surface of the sample on the low refractive index layer side was set at 0 degrees, and the luminous reflectance Y value of the sample was measured based on specular reflected light of incident light.

As a measurement device, a spectral reflectometer (manufactured by Shimadzu Corporation, trade name: UV-2600) was used. The measuring device performs measurement in the wavelength range of 380 nm or more and 780 nm or less, and then carries out conversion by means of software that performs conversion into brightness sensed by human eyes [software built in the measuring device, conditions for calculating reflectance: C light source and viewing angle of 2 degrees]. Measurements were performed at 16 locations for each sample, and the average value of the measurement values at 14 locations excluding the minimum value and the maximum value was taken as the luminous reflectance Y value of each sample.

### 1-3. XPS analysis

From the antireflective members of Examples and Comparative Examples, measurement samples were cut out. Using an X-ray photoelectron spectrometer, the X-ray photoelectron spectra of the C1s orbital, O1s orbital, Si2p orbital, and F1s orbital on the low refractive index layer surface of each measurement sample were measured under the conditions described below. Peak separation was performed for each X-ray photoelectron spectrum to determine the ratios of C elements, O elements, F elements, and Si elements. In addition, from the X-ray photoelectron spectrum of the Si2p orbital, the proportions of Si elements attributed to an inorganic silicon compound (inorganic Si), and Si elements attributed to an organosilicon compound (organic Si) were determined.

Measurements were performed at 2 locations for each sample, and the average value of the measurement values at the 2 locations was taken as the element ratio of the antireflective members of Examples and Comparative Examples.

### <Measurement>

Device: trade name "Kratos Nova" manufactured by Shimadzu Corporation
X-ray source: A1Kα
X-ray output: 150 W
Emission current: 10 mA
Acceleration voltage: 15 kV
Measurement region: 300 × 700 µm
Charge neutralization mechanism: ON
Pass energy (when measuring narrow spectrum): 40 eV

### 1-4. Total light transmittance (Tt) and haze (Hz)

The antireflective members of Examples and Comparative Examples were cut into 10 cm × 10 cm to prepare measurement samples. The total light transmittance in accordance with JIS K7361-1:1997 and the haze in accordance with JIS K7136:2000 of each sample were measured under the following conditions using a haze meter (HM-150, manufactured by Murakami Color Research Laboratory Co., Ltd.). Measurements were performed at 16 locations for each sample, and the average value of the measurement values at 14 locations excluding the minimum value and the maximum value was taken as the total light transmittance and haze of each sample.

In order to stabilize the light source, the power switch of the apparatus was turned on in advance and the apparatus was allowed to stand for 15 minutes or more, and then, calibration was performed without setting anything in the inlet opening where the measurement sample was to be installed. Thereafter, the measurement sample was set at the inlet opening, and the total light transmittance and the haze were measured. The light incident surface during measurement was on the substrate side.

### 1-5. Water contact angle

The antireflective members of Examples and Comparative Examples were cut into 10 cm × 10 cm to prepare measurement samples. On the surface of the sample on the low refractive index layer side, 2.0 µL of pure water was dropped, and the static contact angle was measured 2 seconds after the dropping according to the θ/2 method. Measurements were performed at 10 locations for each sample. From the measurement values at 10 locations, the minimum value and the maximum value were excluded, and the average value of the measurement values at 8 locations was taken as the water contact angle of each sample.

### 1-6. Pencil hardness

The antireflective members of Examples and Comparative Examples were cut into 5 cm × 10 cm to prepare samples. In accordance with JIS K5600-5-4:1999, the pencil hardness of the surface of the sample on the low refractive index layer side was measured under the conditions with a load of 500 g and a rate of 1.4 mm/sec.

For the measurement, a pencil hardness tester from Toyo Seiki Seisaku-sho, Ltd. (product number: NP type pencil scratch coating hardness tester) was used. Using mending tape (3M Company, product number "810-3-18"), both ends of the cut sample were pasted to a base of the pencil hardness tester. A pencil hardness test was performed five times, and the hardness when no appearance abnormality, such as scratches, was observed four or more times was taken as the pencil hardness value of each sample. For example, when the test is performed five times using a 2H pencil and no appearance abnormality occurs four times, then the pencil hardness of the anti-glare laminate is 2H. Discoloration was not included in the appearance abnormality, and only scratches and dents were checked. A pencil hardness of 2H or higher is the acceptable level.

### 1-7. Appearance after measuring coefficient of dynamic friction

The substrate side of the antireflective member after finishing the measurement of coefficient of dynamic friction of 1-1 was pasted to a black plate (manufactured by Kuraray Co., Ltd., trade name: Comoglass DFA2CG 502K (black) Series, thickness 2 mm) through an optically transparent pressure-sensitive adhesive sheet (Panac Co., Ltd., trade name: Panaclean PD-S1) to prepare a sample.

From the antireflective member side of the sample, the state of the low refractive index layer was visually observed and classified into eight grades, from grade 7 to grade 0. The state of each grade is as follows. Grade 7 is the best. Evaluators were healthy individuals in their 30s with naked eye vision or corrected vision of 1.0 or more. The visual observation was performed in a bright room environment where the illuminance of the surface of the antireflective member was 600 lux or more and 1000 lux or less. The visual observation was performed from an oblique direction of about 15 degrees at a distance of 10 cm or more and 30 cm or less between the surface of the antireflective member and the eyes.

Note that, since there are three antireflective members after finishing the measurement of coefficient of dynamic friction of 1-1 for each Example and Comparative Example, there are three samples for each Example and Comparative Example. The three samples may not all be identical in grade. Therefore, a value round off the average value of the grades of the three samples to whole number, was used as the grade for each Example and Comparative Example. Grade 4 or higher is the acceptable level. Whether or not the low refractive index layer is peeled off can be visually determined by the reflected color.

### < Grade >

7: Neither discoloration nor scratches can be observed.
6: Light discoloration is observed, but no scratches can be observed.
5: Discoloration is observed, but no scratches can be observed.
4: Scratches can be observed, but the number of observable scratches is 5 or less.
3: The number of observable scratches is 6 or more and 15 or less.
2: The number of observable scratches is 16 or more.
1: The low refractive index layer is peeled off by about half.
0: The low refractive index layer is completely peeled off.

### 1-8. Discoloration after touch operation

The antireflective members of Examples and Comparative Examples were cut into 10 cm × 10 cm to prepare samples.

An operation was repeated 100 times in which the index finger was brought into contact with the surface of the sample on the low refractive index layer side and the index finger was moved back and forth. During the above operation, the index finger applied a force equivalent to the force used to operate the touch panel on a daily basis. After finishing the operation, the fingerprint component was wiped off from the sample.

The substrate side of the sample after finishing the operation and wiping off the fingerprints was pasted to a black plate (manufactured by Kuraray Co., Ltd., trade name: Comoglass DFA2CG 502K (black) Series, thickness 2 mm) through an optically transparent pressure-sensitive adhesive sheet (Panac Co., Ltd., trade name: Panaclean PD-S1) to prepare a sample.

From the antireflective member side of the sample, the state of the low refractive index layer was visually observed and classified into three grades, from grade 2 to grade 0. The state of each grade is as follows. Grades 1 and 2 are the acceptable level. Evaluators were five healthy individuals in their 30s with naked eye vision or corrected vision of 1.0 or more.

### <Grade>

2: A single tabletop fluorescent lamp was installed in a dark room. With the antireflective member illuminated by the tabletop fluorescent lamp such that the illuminance of the surface of the antireflective member was 1500 lux or more and 2000 lux or less, the antireflective member was observed. Under the aforementioned observation conditions, three or more evaluators answered that they could not observe any discoloration of the antireflective member. (Note: It can be said that the dark room is an environment where color differences based on differences in thickness of the low refractive index layer are noticeable since the direction of light incident on the low refractive index layer is limited. Therefore, it can be said that when Grade 2 is satisfied, Grade 1 is also satisfied.)
1: The antireflective member was observed in a bright room with multiple fluorescent lamps on the ceiling. Under the aforementioned observation conditions, three or more evaluators answered that they could not observe any discoloration of the antireflective member. (Note: The bright room is an environment where the illuminance of the surface of the antireflective member is 600 lux or more and 1000 lux or less.)
0: The antireflective member was observed in a bright room with multiple fluorescent lamps on the ceiling. Under the aforementioned observation conditions, two or less evaluators answered that they could not observe any discoloration of the antireflective member. (Note: The bright room is an environment where the illuminance of the surface of the antireflective member is 600 lux or more and 1000 lux or less.)

### 2. Preparation of antireflective member

### [Example 1]

A coating solution for a hardcoat layer 1 having the following formulation was applied onto a triacetyl cellulose film having a thickness of 80 µm, and then dried at 70°C for 1 minute to vaporize the solvent. Subsequently, by ultraviolet irradiation at a cumulative light amount of 100 mJ/cm² in a nitrogen atmosphere with an oxygen concentration of 200 ppm or less, a hardcoat layer having a dry film thickness of 10 µm was formed.

Next, a coating solution for a high refractive index layer 1 having the following formulation was applied onto the hardcoat layer, and then was dried at 70°C for 1 minute to evaporate the solvent. Subsequently, a high refractive index layer having a dry film thickness of 150 nm was formed by ultraviolet irradiation at a cumulative light amount of 100 mJ/cm² in a nitrogen atmosphere with an oxygen concentration of 200 ppm or less.

Next, a coating solution for a low refractive index layer 1 having the following formulation was applied onto the high refractive index layer, and then was dried at 50°C for 30 seconds (dry wind speed: 0.5 m/s), and then dried at 50°C for 30 seconds (dry wind speed: 5 m/s) to vaporize the solvent. Subsequently, a low refractive index layer having a dry film thickness of 100 nm was formed by ultraviolet irradiation at a cumulative light amount of 200 mJ/cm² in a nitrogen atmosphere with an oxygen concentration of 200 ppm or less whereby the antireflective member of Example 1 was obtained.

### <Coating solution for hardcoat layer 1>

· Ultraviolet curable acrylate-containing composition: 22 parts by mass
   (manufactured by Toagosei Co., Ltd., trade name "ARONIX M-450", solid content: 100%)
· Ultraviolet curable acrylate-containing composition: 17 parts by mass
   (DKS Co. Ltd., trade name "NewFrontier R-1403MB", solid content: 80%)
· Fluorine leveling agent: 1 part by mass
   (DIC Corporation, trade name "MEGAFACE F-568")
· Photopolymerization initiator: 1 part by mass
   (IGM Resins B.V., trade name "Omnirad184")
· Methyl isobutyl ketone: 15 parts by mass
· Methyl ethyl ketone: 44 parts by mass

### <Coating solution for high refractive index layer 1>

· PETA: 1.5 parts by mass
   (manufactured by Toagosei Co., Ltd., trade name "ARONIX M-305", solid content: 100%)
· High refractive index particles: 4.5 parts by mass
   (Nippon Shokubai Co., Ltd., trade name "Zircostar", solid content: 70%)
· Fluorine leveling agent: 0.01 part by mass
   (DIC Corporation, trade name "MEGAFACE F251")
· Photopolymerization initiator: 0.14 part by mass
   (manufactured by IGM Resins B.V., trade name "Omnirad127")
· Methyl isobutyl ketone: 47.6 parts by mass
· Propylene glycol monomethyl ether 47.6 parts by mass

### <Coating solution for low refractive index layer 1>

· Polyethylene glycol diacrylate: 100 parts by mass
   (manufactured by Kyoeisha Chemical Co., Ltd., trade name "Light Acrylate 4EG-A")
· Hollow silica particles: 200 parts by mass
   (average primary particle size of 75 nm, particles surface-treated with a silane coupling agent having a methacryloyl group)
· Solid silica particles: 110 parts by mass
   (average primary particle size of 12.5 nm, particles surface-treated with a silane coupling agent having a methacryloyl group)
· Silicone leveling agent having a methacryloyl group: 5 parts by mass
   (Shin-Etsu Chemical Co., Ltd., trade name "X-22-164E")
· Photopolymerization initiator: 4.3 parts by mass
   (IGM Resins B.V., trade name "Omnirad127")
· Solvent: 14,867 parts by mass
   (mixed solvent of methyl isobutyl ketone and 1-methoxy-2-propyl acetate, mass ratio = 68/32)

### [Example 2]

An antireflective member of Example 2 was obtained in the same manner as in Example 1, except that "polyethylene glycol diacrylate" in the coating solution for a low refractive index layer 1 was changed to polysilsesquioxane having methacryloyl groups (CONSTRUE CHEMICAL Co., Ltd., trade name "Acryloyl polysilsesquioxane cage mixture", weight average molecular weight: 1320).

### [Example 3]

"Polyethylene glycol diacrylate" in the coating solution for a low refractive index layer 1 was changed to polysilsesquioxane having methacryloyl groups (CONSTRUE CHEMICAL Co., Ltd., trade name "Acryloyl polysilsesquioxane cage mixture", weight average molecular weight: 1320). Furthermore, the silicone leveling agent in the coating solution for a low refractive index layer 1 was changed to a fluorine leveling agent having a methacryloyl group (manufactured by DIC Corporation, trade name "MEGAFACE RS-81"), and the amount added was changed from 5 parts by mass to 10 parts by mass. An antireflective member of Example 3 was obtained in the same manner as in Example 1, except for these changes.

### [Example 4]

"100 parts by mass of polyethylene glycol diacrylate" in the coating solution for a low refractive index layer 1 was changed to "50 parts by mass of polyethylene glycol diacrylate" and "50 parts by mass of polysilsesquioxane having methacryloyl groups (CONSTRUE CHEMICAL Co., Ltd., trade name "Acryloyl polysilsesquioxane cage mixture", weight average molecular weight: 1320)". Furthermore, the silicone leveling agent in the coating solution for a low refractive index layer 1 was changed to a fluorine leveling agent having a methacryloyl group (manufactured by DIC Corporation, trade name "MEGAFACE RS-81"), and the amount added was changed from 5 parts by mass to 10 parts by mass. An antireflective member of Example 4 was obtained in the same manner as in Example 1, except for these changes.

### [Comparative Example 1]

An antireflective member of Comparative Example 1 was obtained in the same manner as in Example 1, except that the silicone leveling agent in the coating solution for a low refractive index layer 1 was changed to a fluorine leveling agent having a methacryloyl group (manufactured by DIC Corporation, trade name "MEGAFACE RS-81").

### [Comparative Example 2]

"100 parts by mass of polyethylene glycol diacrylate" in the coating solution for a low refractive index layer 1 was changed to "70 parts by mass of pentaerythritol triacrylate". Furthermore, the "silicone leveling agent" in the coating solution for a low refractive index layer 1 was changed to a "fluorine-containing compound having a (meth)acryloyl group, silane unit having reactivity, and silane unit having a perfluoropolyether group (manufactured by Shin-Etsu Chemical Co., Ltd., trade name "X-71-1203M")", and the amount added was changed from 5 parts by mass to 30 parts by mass. An antireflective member of Comparative Example 2 was obtained in the same manner as in Example 1, except for these changes.

### [Comparative Example 3]

"100 parts by mass of polyethylene glycol diacrylate" in the coating solution for a low refractive index layer 1 was changed to "50 parts by mass of polyethylene glycol diacrylate" and "50 parts by mass of polysilsesquioxane having methacryloyl groups (CONSTRUE CHEMICAL Co., Ltd., trade name "Acryloyl polysilsesquioxane cage mixture", weight average molecular weight: 1320)". An antireflective member of Comparative Example 3 was obtained in the same manner as in Example 1, except for the aforementioned change.

### [Comparative Example 4]

"Polyethylene glycol diacrylate" in the coating solution for a low refractive index layer 1 was changed to polysilsesquioxane having methacryloyl groups (CONSTRUE CHEMICAL Co., Ltd., trade name "Acryloyl polysilsesquioxane cage mixture", weight average molecular weight: 1320). Furthermore, the silicone leveling agent in the coating solution for a low refractive index layer 1 was changed to a fluorine leveling agent having a methacryloyl group (manufactured by DIC Corporation, trade name "MEGAFACE RS-81"), and the amount added was changed from 5 parts by mass to 20 parts by mass. An antireflective member of Comparative Example 4 was obtained in the same manner as in Example 1, except for these changes.

**Table 1**

| | Coefficient of dynamic friction | | | Luminous reflectance Y value (%) | XPS (atomic%) | | | | | | Tt (%) | Hz (%) | Water contact angle (degrees) | Pencil hardness | Appearance after measuring coefficient of dynamic friction | Discoloration after touch operation |
|---|---|---|---|---|---|---|---|---|---|---|---|---|---|---|---|---|
| | Maximum value | Difference | Slope (× 10⁻⁵) | | C elements | N elements | O elements | F elements | Inorganic Si | Organic Si | | | | | | |
| Example 1 | 0.768 | 0.53 | 16.6 | 0.33 | 33.2 | 0.1 | 41.8 | 1.1 | 18.0 | 5.8 | 95.5 | 0.3 | 102 | 3H | 4 | 2 |
| Example 2 | 0.713 | 0.51 | 9.4 | 0.32 | 33.8 | 0.2 | 40.7 | 1.1 | 18.3 | 5.9 | 95.4 | 0.3 | 101 | 3H | 6 | 2 |
| Example 3 | 0.764 | 0.57 | 5.9 | 0.36 | 41.1 | 0.8 | 26.0 | 21.9 | 5.7 | 4.5 | 95.6 | 0.2 | 108 | 3H | 5 | 2 |
| Example 4 | 0.642 | 0.29 | 2.6 | 0.40 | 38.7 | 1.0 | 26.5 | 25.6 | 5.0 | 3.2 | 95.6 | 0.3 | 105 | 3H | 6 | 2 |
| Comparative Example 1 | 0.959 | 0.65 | 25.8 | 0.35 | 42.1 | 0.6 | 33.5 | 11.2 | 10.5 | 2.1 | 95.5 | 0.3 | 105 | 3H | 1 | 0 |
| Comparative Example 2 | 0.990 | 0.67 | 6.8 | 0.27 | 32.2 | 0.6 | 28.7 | 29.0 | 8.3 | 1.2 | 95.7 | 0.2 | 117 | 2H | 0 | 0 |
| Comparative Example 3 | 0,975 | 0.70 | 19.0 | 0.37 | 37.9 | 0.0 | 36.5 | 6.5 | 11.0 | 8.1 | 95.3 | 0.4 | 100 | 3H | 2 | 0 |
| Comparative Example 4 | 0.878 | 0.62 | 2.6 | 0.47 | 37.1 | 0.9 | 26.0 | 27.4 | 5.2 | 3.4 | 95.3 | 0.4 | 105 | 3H | 1 | 1 |

From the results in Table 1, the antireflective members of Examples can suppress scratches and discoloration when repeatedly touched with a finger.

### Reference Signs List

10: substrate
20: hardcoat layer
30: low refractive index layer
100: antireflective member
110: display element
120: image display panel
200: stand that can travel back and forth in the horizontal direction
300: weight
400: retainer
500: base
600: felt member

## Claims

1. An antireflective member comprising a hardcoat layer and a low refractive index layer on a substrate in the order presented, wherein the antireflective member has
a luminous reflectance Y value of 0.60% or less, as measured at an incident angle of light of 5 degrees from the low refractive index layer side, and
a maximum value of coefficient of dynamic friction from a first outward path to a 20,000th outward path, as calculated by the following first measurement, of 0.85 or less: <first measurement>
the antireflective member is fixed on a stand that can travel back and forth in a horizontal direction; the antireflective member is fixed to the stand such that the substrate side faces the stand side; furthermore, a cylindrical felt member with a bottom diameter of 12.7 mm is brought into contact with a surface of the antireflective member on the low refractive index layer side; with the felt member in a fixed position and with a load of 1.47 N applied to the antireflective member by the felt member, the stand to which the antireflective member is fixed is moved back and forth in a horizontal direction at a rate of 100 mm/sec for a distance of 50 mm for an outward path and 50 mm for a homeward path; the back-and-forth movement is performed 20,000 times; in each outward path of the 20,000 back-and-forth movements, a frictional force in a moving direction applied to the felt member is measured for every 0.02 seconds; friction forces at 15 points measured from 0.17 seconds to 0.45 seconds out of 0 seconds to 0.50 seconds, which is a moving time for each outward path, are considered to be dynamic friction forces; based on the dynamic friction forces at 15 points, an average value of dynamic friction force for each outward path is calculated; and the average value of dynamic friction force for each outward path is divided by the load to calculate the coefficient of dynamic friction from a first outward path to a 20,000th outward path.

2. The antireflective member according to claim 1, wherein the maximum value of coefficient of dynamic friction is 0.35 or more and 0.85 or less.

3. The antireflective member according to claim 1, wherein with respect to the first measurement, a difference between the coefficient of dynamic friction at the first outward path and the maximum value of coefficient of dynamic friction is 0.60 or less.

4. The antireflective member according to claim 1, wherein a slope of a regression line, as calculated by a least squares method based on the following first scatter diagram, is 8.0 × 10⁻⁵ or less:
<first scatter diagram>
a scatter diagram, with respect to the first measurement, in which plotting is made with the number of outward paths on a horizontal axis and the coefficient of dynamic friction from a first outward path to a 2000th outward path on a vertical axis.

5. The antireflective member according to claim 1, wherein the low refractive index layer contains a binder resin and hollow particles.

6. The antireflective member according to claim 5, comprising, as the binder resin, a cured product of a bifunctional or higher functional and trifunctional or lower functional (meth)acrylate-based compound.

7. The antireflective member according to claim 5, comprising, as the binder resin, a cured product of polysilsesquioxane.

8. The antireflective member according to claim 5, comprising, as the hollow particles, hollow silica particles.

9. The antireflective member according to claim 1, wherein a ratio of F elements is 19.0 atomic% or more and 27.0 atomic% or less, as obtained by analyzing a surface area of the low refractive index layer by X-ray photoelectron spectroscopy.

10. The antireflective member according to claim 1, wherein a ratio of Si elements attributed to an organosilicon compound is 4.8 atomic% or more and 15.0 atomic% or less, as obtained by analyzing a surface area of the low refractive index layer by X-ray photoelectron spectroscopy.

11. The antireflective member according to claim 1, having a haze of 1.0% or less according to JIS K7136:2000.

12. A polarizing plate comprising a polarizer, a first transparent protective plate disposed on one side of the polarizer, and a second transparent protective plate disposed on the other side of the polarizer, wherein any one of the first transparent protective plate and the second transparent protective plate is the antireflective member according to any one of claims 1 to 11, and the antireflective member is disposed such that a surface thereof on the substrate side faces the polarizer side.

13. An image display panel comprising a display element and an optical film disposed on a light-emitting surface side of the display element, wherein the image display panel comprises the antireflective member according to any one of claims 1 to 11 as the optical film, the antireflective member is disposed such that a surface thereof on the low refractive index layer side faces the opposite side to the display element, and the antireflective member is disposed on an outermost surface.

14. An image display device comprising the image display panel according to claim 13, the antireflective member being disposed on an outermost surface.

15. An antireflective article, wherein the antireflective member according to any one of claims 1 to 11 is disposed on a member such that a surface thereof on the low refractive index layer side faces the opposite side to the member, and the antireflective member is disposed on an outermost surface.

16. A method for selecting an antireflective member, the method comprising
determining whether or not the following (1) to (3) are satisfied, and selecting one that satisfies the following (1) to (3):
(1) being an antireflective member comprising a hardcoat layer and a low refractive index layer on a substrate in the order presented;
(2) having a luminous reflectance Y value of 0.60% or less, as measured at an incident angle of light of 5 degrees from a side having the low refractive index layer with respect to the substrate; and
(3) having a maximum value of coefficient of dynamic friction from a first outward path to a 20,000th outward path, as calculated by the following first measurement, of 0.85 or less: <first measurement>
the antireflective member is fixed on a stand that can travel back and forth in a horizontal direction; the antireflective member is fixed to the stand such that the substrate side faces the stand side; furthermore, a cylindrical felt member with a bottom diameter of 12.7 mm is brought into contact with a surface of the antireflective member on the low refractive index layer side; with the felt member in a fixed position and with a load of 1.47 N applied to the antireflective member by the felt member, the stand to which the antireflective member is fixed is moved back and forth in a horizontal direction at a rate of 100 mm/sec for a distance of 50 mm for an outward path and 50 mm for a homeward path; the back-and-forth movement is performed 20,000 times; in each outward path of the 20,000 back-and-forth movements, a frictional force in a moving direction applied to the felt member is measured for every 0.02 seconds; friction forces at 15 points measured from 0.17 seconds to 0.45 seconds out of 0 seconds to 0.50 seconds, which is a moving time for each outward path, are considered to be dynamic friction forces; based on the dynamic friction forces at 15 points, an average value of dynamic friction force for each outward path is calculated; and the average value of dynamic friction force for each outward path is divided by the load to calculate the coefficient of dynamic friction from a first outward path to a 20,000th outward path.
